# EUROPEAN PATENT APPLICATION

(11) **EP 4 580 028 A1**
(43) Date of publication of application: **02.07.2025**
(21) Application number: 23857237.4
(22) Date of filing: 10.08.2023
(51) Int. Cl.: H02M 7/48

(54) **POWER CONVERSION DEVICE**

(30) Priority: 26.08.2022 JP 2022135428
(71) Applicant: Panasonic Intellectual Property Management Co., Ltd., Kadoma-shi, Osaka 571-0057 (JP)
(72) Inventor: MAEDA, Ryosuke, Kadoma-shi, Osaka 571-0057 (JP); HIGASHIYAMA, Koji, Kadoma-shi, Osaka 571-0057 (JP); KAMON, Yutaka, Kadoma-shi, Osaka 571-0057 (JP)
(74) Representative: Novagraaf International SA
(86) International application number: PCT/JP2023/029341
(87) International publication number: WO 2024/043124

(57) **Abstract**

The problem is to improve the power conversion efficiency. In a power converter (100), a controller (50) performs a first control operation including: allowing a high-level period of a control signal for each of a plurality of switches (8), corresponding to one of a plurality of switching circuits (10), to overlap with a dead time and setting a beginning of the high-level period at a point in time earlier by an additional time than a beginning of the dead time. The controller (50) selectively performs, according to a potential detected at a fourth terminal (154) of a regenerative capacitor (15) and polarities of a plurality of output currents (iU, iV, iW) supplied from a plurality of AC terminals (41), either a second control operation including allowing respective high-level periods of control signals for two switches (8) belonging to the plurality of switches (8) to overlap with each other or a third control operation including prohibiting the high-level periods of the control signals for the plurality of switches (8) from overlapping with each other.

## Description

### Technical Field

The present disclosure generally relates to a power converter. More particularly, the present disclosure relates to a power converter having the ability to convert DC power into AC power.

### Background Art

Patent Literature 1 discloses a power converter for converting DC power into multiphase AC power.

The power converter of Patent Literature 1 includes a main switching means (power converter circuit), two capacitors, one coil (resonant inductor), a plurality of auxiliary switch elements, and a control means. The main switching means includes a plurality of main switching circuits provided for respective phases of the multiphase AC power. Each of the plurality of main switching circuits is implemented as a pair of main switch elements which are connected in series between both terminals of a DC power supply and uses, as the output node of its associated phase, the interconnection node of the pair of main switch elements. The two capacitors divide the voltage of the DC power supply. One terminal of the coil is connected to a voltage division node of the two capacitors. The plurality of auxiliary switch elements connect the other terminal of the coil and the output nodes of the respective phases. When determining that a plurality of phase currents flow through the coil, the control means controls the plurality of auxiliary switch elements to make the amount of current flowing through at least one phase smaller than a preset amount.

The power converter sometimes comes to have decreased power conversion efficiency due to a change in the state of a load.

### Citation List

### Patent Literature

Patent Literature 1: JP 2010-233306 A

### Summary of Invention

An object of the present disclosure is to provide a power converter having the ability to improve the power conversion efficiency.

A power converter according to an aspect of the present disclosure includes a first DC terminal and a second DC terminal, a power converter circuit, a plurality of AC terminals, a plurality of switches, a plurality of resonant capacitors, a resonant inductor, a regenerative capacitor, and a controller. The power converter circuit includes a plurality of first switching elements and a plurality of second switching elements. In the power converter circuit, a plurality of switching circuits in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first terminal thereof connected to the connection node between the first switching element and the second switching element of a corresponding one of the plurality of switching circuits. The plurality of switches have their respective second terminals connected in common to a common connection node. The plurality of resonant capacitors are provided one to one for the plurality of switches. Each of the plurality of resonant capacitors is connected between the first terminal of a corresponding one of the plurality of switches and the second DC terminal. The resonant inductor has a first terminal and a second terminal. In the resonant inductor, the first terminal of the resonant inductor is connected to the common connection node. The regenerative capacitor has a third terminal and a fourth terminal. In the regenerative capacitor, the third terminal is connected to either the first DC terminal or the second DC terminal. The controller applies a PWM signal, having a potential alternating between a high level and a low level, to each of the plurality of first switching elements and the plurality of second switching elements. The controller performs a first control operation. The controller performs the first control operation by setting, with respect to each of the plurality of switching circuits, a dead time between a high-level period of the PWM signal for the first switching element and a high-level period of the PWM signal for the second switching element. The controller performs the first control operation by allowing a high-level period of a control signal for each of the plurality of switches, corresponding to one of the plurality of switching circuits, to overlap with the dead time and setting a beginning of the high-level period at a point in time earlier by an additional time than a beginning of the dead time. The controller selectively performs, according to a potential detected at the fourth terminal of the regenerative capacitor and polarities of a plurality of output currents supplied from the plurality of AC terminals, either a second control operation including allowing respective high-level periods of control signals for two switches belonging to the plurality of switches to overlap with each other or a third control operation including prohibiting the high-level periods of the control signals for the plurality of switches from overlapping with each other.

A power converter according to another aspect of the present disclosure includes a first DC terminal and a second DC terminal, a power converter circuit, a plurality of AC terminals, a plurality of switches, a plurality of resonant circuits, a regenerative capacitor, and a controller. The power converter circuit includes a plurality of first switching elements and a plurality of second switching elements. In the power converter circuit, a plurality of switching circuits in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first terminal thereof connected to the connection node between the first switching element and the second switching element of a corresponding one of the plurality of switching circuits. The plurality of resonant circuits are provided one to one for the plurality of switches. Each of the plurality of resonant circuits has a variable resonant frequency. The regenerative capacitor has a third terminal and a fourth terminal. In the regenerative capacitor, the third terminal is connected to either the first DC terminal or the second DC terminal, and the fourth terminal is connected to the plurality of resonant circuits. The controller applies a PWM signal, having a potential alternating between a high level and a low level, to each of the plurality of first switching elements and the plurality of second switching elements. Each of the plurality of resonant circuits includes: a resonant capacitor connected between the first terminal of a corresponding one of the plurality of switches and the second DC terminal; and a resonant inductor connected between a second terminal of a corresponding one of the plurality of switches and the fourth terminal of the regenerative capacitor. The controller sets, with respect to each of the plurality of switching circuits, a dead time between a high-level period of the PWM signal for the first switching element and a high-level period of the PWM signal for the second switching element. The controller performs a first control operation. The controller performs the first control operation including allowing a high-level period of a control signal for each of the plurality of switches, corresponding to one of the plurality of switching circuits, to overlap with the dead time and setting a beginning of the high-level period at a point in time earlier by an additional time than a beginning of the dead time. The controller changes, according to a potential at the fourth terminal of the regenerative capacitor, a resonant frequency of at least one resonant circuit belonging to the plurality of resonant circuits.

### Brief Description of Drawings

FIG. 1 is a circuit diagram of a system including a power converter according to a first embodiment;
FIG. 2 illustrates how the power converter operates when its controller has performed a first control operation;
FIG. 3 also illustrates how the power converter operates when its controller has performed the first control operation;
FIG. 4 illustrates how the controller operates in the power converter;
FIG. 5 shows how duties, respectively corresponding to three-phase voltage instructions in an AC load connected to a plurality of AC terminals of the power converter, change with time;
FIG. 6 is a timing chart illustrating a situation where the controller has performed an independent control on two-phase switches in the power converter;
FIG. 7 is a timing chart illustrating a situation where the controller has performed a simultaneous control on the two-phase switches in the power converter;
FIG. 8 is a timing chart illustrating a situation where the controller has performed the simultaneous control on the two-phase switches in the power converter;
FIG. 9 is a timing chart illustrating a situation where the controller has performed the independent control on the two-phase switches in the power converter;
FIG. 10 is a timing chart illustrating a situation where the controller has performed the simultaneous control on the two-phase switches in the power converter;
FIG. 11 is a timing chart illustrating a situation where the controller has performed the independent control on the two-phase switches in the power converter;
FIG. 12 is a timing chart also illustrating a situation where the controller performs the simultaneous control on the two-phase switches in the power converter;
FIG. 13 is a circuit diagram of a system including a power converter according to a first variation of the first embodiment;
FIG. 14 is a circuit diagram of a system including a power converter according to a second variation of the first embodiment;
FIG. 15 is a circuit diagram of a system including a power converter according to a third variation of the first embodiment;
FIG. 16 is a circuit diagram of a system including a power converter according to a fourth variation of the first embodiment;
FIG. 17 is a circuit diagram of a system including a power converter according to a fifth variation of the first embodiment;
FIG. 18 is a circuit diagram of a system including a power converter according to a second embodiment;
FIG. 19 is a circuit diagram of a system including a power converter according to a third embodiment;
FIG. 20 is a circuit diagram of a power converter according to a fourth embodiment;
FIG. 21 is a timing chart illustrating how the power converter may operate;
FIG. 22 is a timing chart illustrating how the power converter may also operate; and
FIG. 23 is a circuit diagram of a system including a power converter according to a fifth embodiment.

### Description of Embodiments

### (First embodiment)

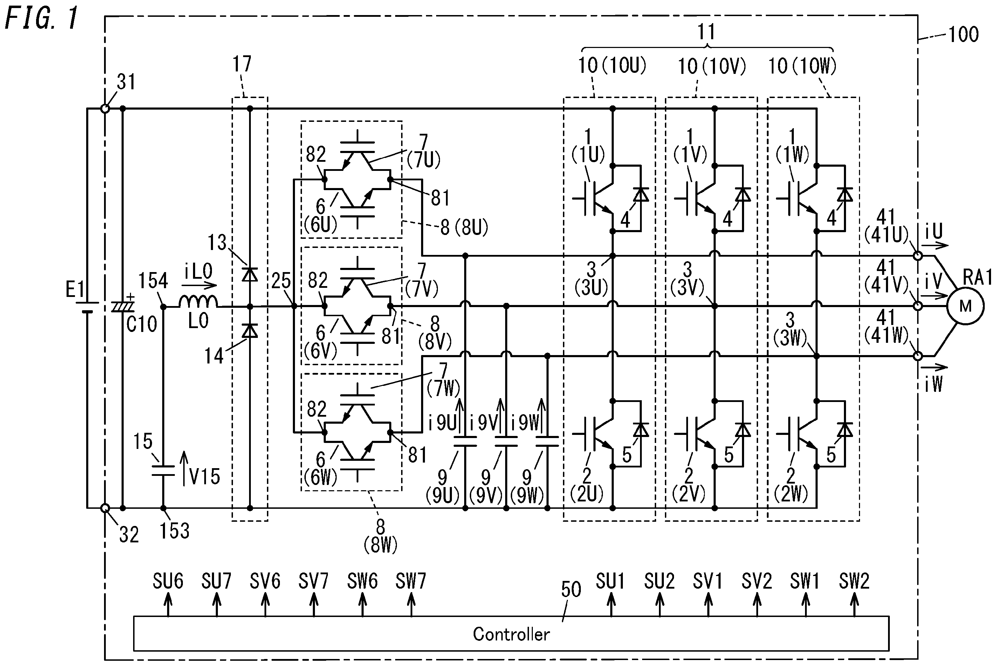

A power converter 100 according to a first embodiment will be described with reference to FIGS. 1-12.

### (1) Overall configuration for power converter

The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (e.g., three) switches 8, a plurality of (e.g., three) resonant capacitors 9, a regenerative capacitor 15, a resonant inductor L0, and a controller 50. The power converter 100 further includes a protection circuit 17 and a capacitor C10. Each of the plurality of switches 8 may be, for example, a bidirectional switch.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected in parallel. In the power converter circuit 11, the plurality of first switching elements 1 are connected to the first DC terminal 31 and the plurality of second switching elements 2 are connected to the second DC terminal 32. The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10. The plurality of switches 8 are provided one to one for the plurality of switching circuits 10. Each of the plurality of switches 8 has a first terminal 81 thereof connected to the connection node 3 between the first switching element 1 and the second switching element 2 of a corresponding one of the plurality of switching circuits 10. The plurality of resonant capacitors 9 are provided one to one for the plurality of switches 8. Each of the plurality of resonant capacitors 9 is connected between the first terminal 81 of a corresponding one of the plurality of switches 8 and the second DC terminal 32. The resonant inductor L0 has a first terminal and a second terminal. The first terminal of the resonant inductor L0 is connected to a common connection node 25. The regenerative capacitor 15 has a third terminal 153 and a fourth terminal 154. In the regenerative capacitor 15, the third terminal 153 thereof is connected to the second DC terminal 32 and the fourth terminal 154 thereof is connected to the common connection node 25. The controller 50 controls the plurality of first switching elements 1, the plurality of second switching elements 2, and the plurality of switches 8.

### (2) Details of power converter

In the following description, as for the plurality of switching circuits 10, the switching circuits 10 for the U-, V, and W-phases will be hereinafter referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter referred to as a "first switching element 1U" and a "second switching element 2U," respectively. Likewise, in the following description, the first switching element 1 and second switching element 2 of the switching circuit 10V will be hereinafter referred to as a "first switching element 1V" and a "second switching element 2V," respectively. Likewise, in the following description, the first switching element 1 and second switching element 2 of the switching circuit 10W will be hereinafter referred to as a "first switching element 1W" and a "second switching element 2W," respectively. Furthermore, in the following description, the connection node 3 between the first switching element 1U and the second switching element 2U will be hereinafter referred to as a "connection node 3U," the connection node 3 between the first switching element 1V and the second switching element 2V will be hereinafter referred to as a "connection node 3V," and the connection node 3 between the first switching element 1W and the second switching element 2W will be hereinafter referred to as a "connection node 3W." Furthermore, in the following description, the AC terminal 41 connected to the connection node 3U will be hereinafter referred to as an "AC terminal 41U," the AC terminal 41 connected to the connection node 3V will be hereinafter referred to as an "AC terminal 41V," and the AC terminal 41 connected to the connection node 3W will be hereinafter referred to as an "AC terminal 41W." Furthermore, in the following description, the resonant capacitor 9 connected to the second switching element 2U in parallel will be hereinafter referred to as a "resonant capacitor 9U," the resonant capacitor 9 connected to the second switching element 2V in parallel will be hereinafter referred to as a "resonant capacitor 9V," and the resonant capacitor 9 connected to the second switching element 2W in parallel will be hereinafter referred to as a "resonant capacitor 9W." Furthermore, in the following description, the switch 8 connected to the connection node 3U will be hereinafter referred to as a "switch 8U," the switch 8 connected to the connection node 3V will be hereinafter referred to as a "switch 8V," and the switch 8 connected to the connection node 3W will be hereinafter referred to as a "switch 8W."

In the power converter 100, the higher-potential output terminal (positive electrode) of the DC power supply E1 is connected to the first DC terminal 31, and the lower-potential output terminal (negative electrode) of the DC power supply E1 is connected to the second DC terminal 32. Also, in the power converter 100, the U-, V, and W-phases of the AC load RA1 are connected to the three AC terminals 41U, 41V, and 41W, respectively.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase of the AC load RA1 may be connected, for example, to the connection node 3U between the first switching element 1U and the second switching element 2U via the AC terminal 41U. The V-phase of the AC load RA1 may be connected, for example, to the connection node 3V between the first switching element 1V and the second switching element 2V via the AC terminal 41V. The W-phase of the AC load RA1 may be connected, for example, to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first terminal 81 of its corresponding switch 8 and the second DC terminal 32. The power converter 100 includes a plurality of resonant circuits. The plurality of resonant circuits includes a resonant circuit having the resonant capacitor 9U and the resonant inductor L0, a resonant circuit having the resonant capacitor 9V and the resonant inductor L0, and a resonant circuit having the resonant capacitor 9W and the resonant inductor L0. The plurality of resonant circuits shares the resonant inductor L0 in common.

Each of the plurality of switches 8 may include, for example, two IGBTs, namely, a first IGBT 6 and a second IGBT 7, which are connected together in antiparallel. In each of the plurality of switches 8, the collector terminal of the first IGBT 6 and the emitter terminal of the second IGBT 7 are connected to each other and the emitter terminal of the first IGBT 6 and the collector terminal of the second IGBT 7 are connected to each other. In each of the plurality of switches 8, the emitter terminal of the first IGBT 6 is connected to the connection node 3 of the switching circuit 10 corresponding to the switch 8 including the first IGBT 6. In each of the plurality of switches 8, the collector terminal of the second IGBT 7 is connected to the connection node 3 of the switching circuit 10 corresponding to the switch 8 including the second IGBT 7. The switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the first IGBT 6 and second IGBT 7 of the switch 8U will be hereinafter referred to as a "first IGBT 6U" and a "second IGBT 7U," respectively, the first IGBT 6 and second IGBT 7 of the switch 8V will be hereinafter referred to as a "first IGBT 6V" and a "second IGBT 7V," respectively, and the first IGBT 6 and second IGBT 7 of the switch 8W will be hereinafter referred to as a "first IGBT 6W" and a "second IGBT 7W," respectively, for the sake of convenience of description.

The plurality of switches 8 are controlled by the controller 50. In other words, the first IGBT 6U, the second IGBT 7U, the first IGBT 6V, the second IGBT 7V, the first IGBT 6W, and the second IGBT 7W are controlled by the controller 50.

The resonant inductor L0 has a first terminal and a second terminal. In the resonant inductor L0, the first terminal of the resonant inductor L0 is connected to the common connection node 25 and the second terminal of the resonant inductor L0 is connected to the fourth terminal 154 of the regenerative capacitor 15.

The regenerative capacitor 15 is connected between the second terminal of the resonant inductor L0 and the second DC terminal 32. The regenerative capacitor 15 may be, for example, a film capacitor.

The protection circuit 17 includes a third diode 13 and a fourth diode 14. The third diode 13 is connected between the common connection node 25 and the first DC terminal 31. In the third diode 13, the anode of the third diode 13 is connected to the common connection node 25 and the cathode of the third diode 13 is connected to the first DC terminal 31. The fourth diode 14 is connected between the common connection node 25 and the second DC terminal 32. In the fourth diode 14, the anode of the fourth diode 14 is connected to the second DC terminal 32 and the cathode of the fourth diode 14 is connected to the common connection node 25. Thus, the fourth diode 14 is connected to the third diode 13 in series.

The capacitor C10 is connected between the first DC terminal 31 and the second DC terminal 32 and is connected to the power converter circuit 11 in parallel. The capacitor C10 may be, for example, an electrolytic capacitor.

The controller 50 controls the plurality of first switching elements 1, the plurality of second switching elements 2, and the plurality of switches 8. The agent that performs the functions of the controller 50 includes a computer system. The computer system includes a single or a plurality of computers. The computer system may include a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 50 outputs pulse width modulation (PWM) signals SU1, SV1, SW1 to control the ON/OFF states of the plurality of first switching elements 1U, 1V, 1W, respectively. Each of the PWM signals SU1, SV1, SW1 is a signal having, for example, a potential level that alternates between a first potential level (hereinafter referred to as a "low level") and a second potential level (hereinafter referred to as a "high level") higher than the first potential level. The first switching elements 1U, 1V, 1W respectively turn ON when the PWM signals SU1, SV1, SW1 have high level and respectively turn OFF when the PWM signals SU1, SV1, SW1 have low level. In addition, the controller 50 also outputs PWM signals SU2, SV2, SW2 to control the ON/OFF states of the plurality of second switching elements 2U, 2V, 2W, respectively. Each of the PWM signals SU2, SV2, SW2 is a signal having, for example, a potential level that alternates between the first potential level (hereinafter referred to as a "low level") and the second potential level (hereinafter referred to as a "high level") higher than the first potential level. The second switching elements 2U, 2V, 2W respectively turn ON when the PWM signals SU2, SV2, SW2 have high level and respectively turn OFF when the PWM signals SU2, SV2, SW2 have low level.

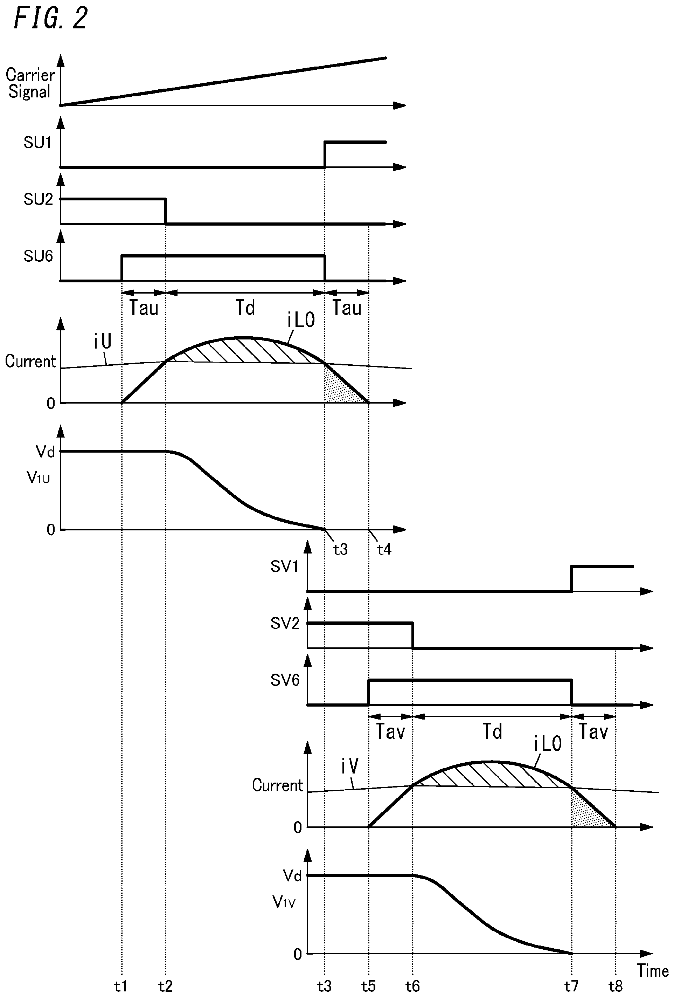

The controller 50 generates, using a carrier signal (refer to FIG. 2) having a saw-tooth waveform, the PWM signals SU1, SV1, SW1 for the plurality of first switching elements 1U, 1V, 1W, respectively, and the PWM signals SU2, SV2, SW2 for the plurality of second switching elements 2U, 2V, 2W, respectively. More specifically, the controller 50 generates, based on at least the carrier signal and a U-phase voltage instruction, the PWM signals SU1, SU2 to be applied to the first switching element 1U and the second switching element 2U, respectively. Also, the controller 50 generates, based on at least the carrier signal and a V-phase voltage instruction, the PWM signals SV1, SV2 to be applied to the first switching element 1V and the second switching element 2V, respectively. Furthermore, the controller 50 generates, based on at least the carrier signal and a W-phase voltage instruction, the PWM signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the amplitude (voltage instruction value) changes with time. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

The duty of the PWM signals SU1, SU2 to be applied from the controller 50 to the first switching element 1U and the second switching element 2U, respectively, varies in accordance with the U-phase voltage instruction. The controller 50 generates the PWM signal SU1 to be applied to the first switching element 1U by comparing the U-phase voltage instruction with the carrier signal. The controller 50 generates the PWM signal SU2 to be applied to the second switching element 2U by inverting the PWM signal SU1 to be applied to the first switching element 1U. In addition, to prevent the respective ON periods of the first switching element 1U and the second switching element 2U from overlapping with each other, the controller 50 sets a dead time Td (refer to FIG. 2) between a high-level period of the PWM signal SU1 and a high-level period of the PWM signal SU2.

The duty of the PWM signals SV1, SV2 to be applied from the controller 50 to the first switching element 1V and the second switching element 2V, respectively, varies in accordance with the V-phase voltage instruction. The controller 50 generates the PWM signal SV1 to be applied to the first switching element 1V by comparing the V-phase voltage instruction with the carrier signal. The controller 50 generates the PWM signal SV2 to be applied to the second switching element 2V by inverting the PWM signal SV1 to be applied to the first switching element 1V. In addition, to prevent the respective ON periods of the first switching element 1V and the second switching element 2V from overlapping with each other, the controller 50 sets the dead time Td (refer to FIG. 2) between a high-level period of the PWM signal SV1 and a high-level period of the PWM signal SV2.

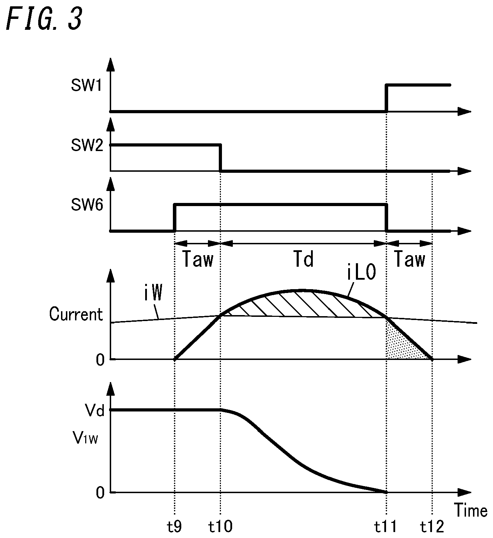

The duty of the PWM signals SW1, SW2 to be applied from the controller 50 to the first switching element 1W and the second switching element 2W, respectively, varies in accordance with the W-phase voltage instruction. The controller 50 generates the PWM signal SW1 to be applied to the first switching element 1W by comparing the W-phase voltage instruction with the carrier signal. The controller 50 generates the PWM signal SW2 to be applied to the second switching element 2W by inverting the PWM signal SW1 to be applied to the first switching element 1W. In addition, to prevent the respective ON periods of the first switching element 1W and the second switching element 2W from overlapping with each other, the controller 50 sets a dead time Td (refer to FIG. 3) between a high-level period of the PWM signal SW1 and a high-level period of the PWM signal SW2.

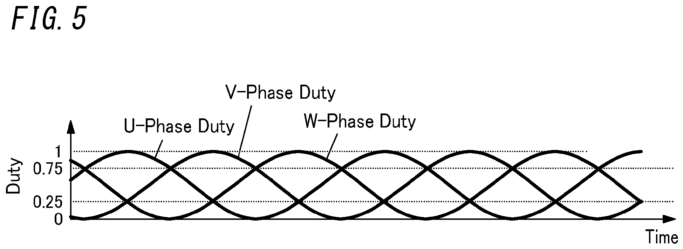

The U-phase voltage instruction, the V-phase voltage instruction, and the W-phase voltage instruction may be, for example, sinusoidal wave signals, of which the phases are different from each other by 120 degrees and of which the amplitude changes with time. Thus, the respective duties of the PWM signals SU1, SV1, SW1 change in the form of sinusoidal waves, of which the phases are different from each other by 120 degrees, as shown in FIG. 5, for example. In the same way, the respective duties of the PWM signals SU2, SV2, SW2 also change in the form of sinusoidal waves, of which the phases are different from each other by 120 degrees.

The controller 50 generates the respective PWM signals SU1, SU2, SV1, SV2, SW1, SW2 based on the carrier signal, the respective voltage instructions, and information about the state of the AC load RA1. For example, if the AC load RA1 is a three-phase motor, the information about the state of the AC load RA1 may include, for example, detection values provided by a plurality of current sensors for respectively detecting output currents iU, iV, iW flowing through the U-, V-, and W-phases of the AC load RA1.

The plurality of switches 8, the resonant inductor L0, the plurality of resonant capacitors 9, and the regenerative capacitor 15 are provided to make zero-voltage soft switching of the plurality of first switching elements 1 and the plurality of second switching elements 2.

In this power converter 100, the controller 50 controls not only the plurality of first switching elements 1 and the plurality of second switching elements 2 of the power converter circuit 11 but also the plurality of switches 8 as well.

The controller 50 generates control signals SU6, SU7, SV6, SV7, SW6, SW7 for controlling the respective ON/OFF states of the first IGBT 6U, the second IGBT 7U, the first IGBT 6V, the second IGBT 7V, the first IGBT 6W, and the second IGBT 7W, respectively, and outputs the control signals SU6, SU7, SV6, SV7, SW6, SW7 to the respective gate terminals of the first IGBT 6U, the second IGBT 7U, the first IGBT 6V, the second IGBT 7V, the first IGBT 6W, and the second IGBT 7W.

If the first IGBT 6U is ON and the second IGBT 7U is OFF, the switch 8U allows a charging current that flows through the regenerative capacitor 15, the resonant inductor L0, the switch 8U, and the resonant capacitor 9U in this order to charge the resonant capacitor 9U to pass therethrough. On the other hand, if the first IGBT 6U is OFF and the second IGBT 7U is ON, the switch 8U allows a discharging current that flows through the resonant capacitor 9U, the switch 8U, the resonant inductor L0, and the regenerative capacitor 15 in this order to remove electric charges from the resonant capacitor 9U to pass therethrough.

If the first IGBT 6V is ON and the second IGBT 7V is OFF, the switch 8V allows a charging current that flows through the regenerative capacitor 15, the resonant inductor L0, the switch 8V, and the resonant capacitor 9V in this order to charge the resonant capacitor 9V to pass therethrough. On the other hand, if the first IGBT 6V is OFF and the second IGBT 7V is ON, the switch 8V allows a discharging current that flows through the resonant capacitor 9V, the switch 8V, the resonant inductor L0, and the regenerative capacitor 15 in this order to remove electric charges from the resonant capacitor 9V to pass therethrough.

If the first IGBT 6W is ON and the second IGBT 7W is OFF, the switch 8W allows a charging current that flows through the regenerative capacitor 15, the resonant inductor L0, the switch 8W, and the resonant capacitor 9W in this order to charge the resonant capacitor 9W to pass therethrough. On the other hand, if the first IGBT 6W is OFF and the second IGBT 7W is ON, the switch 8W allows a discharging current that flows through the resonant capacitor 9W, the switch 8W, the resonant inductor L0, and the regenerative capacitor 15 in this order to remove electric charges from the resonant capacitor 9W to pass therethrough.

### (3) Operation of power converter

In the following description, as for a currents iL0 flowing through the resonant inductor L0, if the current flows in the direction indicated by the arrow shown in FIG. 1, then the polarity of the current iL0 is supposed to be positive. On the other hand, if the current iL0 flows in the direction opposite from the one indicated by the arrow shown in FIG. 1, then the polarity of the current iL0 is supposed to be negative. In addition, in the following description, as for each of the output currents iU, iV, iW respectively flowing through the U-, V-, and W-phases of the AC load RA1, if the current iU, iV, iW flows in the direction indicated by a corresponding one of the arrows shown in FIG. 1, then the polarity of the current iU, iV, iW is supposed to be positive. On the other hand, if the current iU, iV, iW flows in the direction opposite from the one indicated by the arrow shown in FIG. 1, then the polarity of the current iU, iV, iW is supposed to be negative. Furthermore, as for each of currents i9U, i9V, i9W flowing through the resonant capacitors 9U, 9V, 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, i9V, i9W is supposed to be negative.

In this power converter 100, the first IGBT 6U of the switch 8U may turn OFF in a state where the first IGBT 6U of the switch 8U is ON and the positive current iL0 is flowing through the resonant inductor L0, for example. In that case, the current iL0 flowing through the resonant inductor L0 is regenerated to the power converter circuit 11 via the third diode 13 until the current iL0 flowing through the resonant inductor L0 goes zero due to the consumption of energy of the resonant inductor L0. Also, in this power converter 100, the second IGBT 7U of the switch 8U may turn OFF in a state where the second IGBT 7U of the switch 8U is ON and the negative current iL0 is flowing through the resonant inductor L0, for example. In that case, the current iL0 flows through the resonant inductor L0 along the path passing through the fourth diode 14, the resonant inductor L0, and the regenerative capacitor 15 in this order until the current iL0 goes zero due to the consumption of energy of the resonant inductor L0.

Furthermore, in this power converter 100, the first IGBT 6V of the switch 8V may turn OFF in a state where the first IGBT 6V of the switch 8V is ON and the positive current iL0 is flowing through the resonant inductor L0, for example. In that case, the current iL0 flowing through the resonant inductor L0 is regenerated to the power converter circuit 11 via the third diode 13 until the current iL0 flowing through the resonant inductor L0 goes zero due to the consumption of energy of the resonant inductor L0. Furthermore, in this power converter 100, the second IGBT 7V of the switch 8V may turn OFF in a state where the second IGBT 7V of the switch 8V is ON and the negative current iL0 is flowing through the resonant inductor L0, for example. In that case, the current iL0 flows through the resonant inductor L0 along the path passing through the fourth diode 14, the resonant inductor L0, and the regenerative capacitor 15 in this order until the current iL0 goes zero due to the consumption of energy of the resonant inductor L0.

Furthermore, in this power converter 100, the first IGBT 6W of the switch 8W may turn OFF in a state where the first IGBT 6W of the switch 8W is ON and the positive current iL0 is flowing through the resonant inductor L0, for example. In that case, the current iL0 flowing through the resonant inductor L0 is regenerated to the power converter circuit 11 via the third diode 13 until the current iL0 flowing through the resonant inductor L0 goes zero due to the consumption of energy of the resonant inductor L0. Furthermore, in this power converter 100, the second IGBT 7W of the switch 8W may turn OFF in a state where the second IGBT 7W of the switch 8W is ON and the negative current iL0 is flowing through the resonant inductor L0, for example. In that case, the current iL0 flows through the resonant inductor L0 along the path passing through the fourth diode 14, the resonant inductor L0, and the regenerative capacitor 15 in this order until the current iL0 goes zero due to the consumption of energy of the resonant inductor L0.

Next, it will be described with reference to FIGS. 1-3 how the controller 50 operates in making zero-voltage soft switching control of each of the plurality of first switching elements 1 and each of the plurality of second switching elements 2.

The controller 50 performs the first control operation by setting, with respect to each of the plurality of switching circuits 10, a dead time Td between a high-level period of the PWM signal SU1, SV1, SW1 for the first switching element 1U, 1V, 1W and a high-level period of the PWM signal SU2, SV2, SW2 for the second switching element 2U, 2V, 2W. In addition, the controller 50 also performs the first control operation by causing a high-level period of a control signal for each of the plurality of switches 8, corresponding to one of the plurality of switching circuits 10, to overlap with the dead time Td and setting the beginning of the high-level period at a point in time earlier than the beginning of the dead time Td by an additional time.

The first control operation will now be described in further detail.

When the zero-voltage soft switching control is performed on the first switching element 1, the voltage across the first switching element 1 needs to be reduced to zero just before the first switching element 1 as the target of zero-voltage soft switching turns ON. Thus, the controller 50 turns ON the first IGBT 6 corresponding to the first switching element 1 as the target of the zero-voltage soft switching control. In this manner, the controller 50 causes the resonant inductor L0 and resonant capacitor 9 connected to the first switching element 1 to produce resonance and charge the resonant capacitor 9 with the electric charges removed from the regenerative capacitor 15, thereby reducing the voltage across the first switching element 1 to zero.

On the other hand, when the zero-voltage soft switching control is performed on the second switching element 2, the voltage across the second switching element 2 needs to be reduced to zero just before the second switching element 2 as the target of the zero-voltage soft switching control turns ON. Thus, the controller 50 turns ON the second IGBT 7 corresponding to the second switching element 2 as the target of the zero-voltage soft switching control. In this manner, the controller 50 causes the resonant inductor L0 and resonant capacitor 9 connected to the second switching element 2 to produce resonance and discharge electricity from the resonant capacitor 9 to the regenerative capacitor 15, thereby reducing the voltage across the second switching element 2 to zero. The controller 50 charges and discharges the resonant capacitor 9 via the switch 8 such that the dead time Td agrees with a half cycle (π × √LC) of LC resonance. This allows the power converter 100 to make zero-voltage soft switching. In (π × √LC) representing a half cycle of LC resonance, "L" is the inductance of the resonant inductor L0, and "C" is the capacitance of the resonant capacitor 9.

The PWM signals SU1, SU2 to be respectively applied from the controller 50 to the first switching element 1U and the second switching element 2U of the switching circuit 10U are shown in FIG. 2. In addition, the control signal SU6 to be applied from the controller 50 to the first IGBT 6U of the switch 8U, the output current iU flowing through the U-phase of the AC load RA1, the current iL0 flowing through the resonant inductor L0, and the voltage V_{1U} across the first switching element 1U are also shown in FIG. 2. Furthermore, the PWM signals SV1, SV2 to be respectively applied from the controller 50 to the first switching element 1V and the second switching element 2V of the switching circuit 10V are shown in FIG. 2. In addition, the control signal SV6 to be applied from the controller 50 to the first IGBT 6V of the switch 8V, the output current iV flowing through the V-phase of the AC load RA1, the current iL0 flowing through the resonant inductor L0, and the voltage V_{1V} across the first switching element 1V are also shown in FIG. 2.

Furthermore, the dead time Td that the controller 50 sets to prevent the first switching element 1 and the second switching element 2 of the same phase from turning ON simultaneously is also shown in FIG. 2. Besides, an additional time Tau set by the controller 50 with respect to the control signal SU6 for the first IGBT 6U of the switch 8U and an additional time Tav set by the controller 50 with respect to the control signal SV6 for the first IGBT 6V of the switch 8V are also shown in FIG. 2. The additional time Tau and the additional time Tav will be described later.

The PWM signals SW1, SW2 to be respectively applied from the controller 50 to the first switching element 1W and the second switching element 2W of the switching circuit 10W are shown in FIG. 3. In addition, the control signal SW6 to be applied from the controller 50 to the first IGBT 6W of the switch 8W and the output current iW flowing through the W-phase of the AC load RA1 are also shown in FIG. 3. The current iL3 flowing through the resonant inductor L0 is also shown in FIG. 3. The voltage V_{1W} across the first switching element 1W is also shown in FIG. 3.

Furthermore, the dead time Td that the controller 50 sets to prevent the first switching element 1W and the second switching element 2W from turning ON simultaneously is also shown in FIG. 3. Besides, an additional time Taw set by the controller 50 with respect to the control signal SW6 for the first IGBT 6W of the switch 8W is also shown in FIG. 3. The additional time Taw will be described later.

The additional time Tau is an amount of time that the controller 50 provides to make the high-level period of the control signal SU6 longer than the dead time Td by setting the beginning t1 of the high-level period of the control signal SU6 at a point in time earlier than the beginning t2 of the dead time Td as shown in FIG. 2. The length of the additional time Tau is determined by the value of the output current iU. To start producing the LC resonance from the beginning t2 of the dead time Td, it is preferable that the value of the current iL0 agree with the value of the output current iU at the beginning t2 of the dead time Td. This is because as long as iL0 < iU is satisfied, all current flows through the AC load RA1, and therefore, the resonant capacitor 9U cannot be charged. The end of the high-level period of the control signal SU6 may be simultaneous with, or later than, the end t3 of the dead time Td. In the example shown in FIG. 2, the end of the high-level period of the control signal SU6 is set to be simultaneous with the end t3 of the dead time Td. The controller 50 sets the high-level period of the control signal SU6 at Tau + Td. The voltage V_{1U} across the first switching element 1U goes zero at the end t3 of the dead time Td. In the example shown in FIG. 2, the current iL0 starts flowing through the resonant inductor L0 at the beginning t1 of the high-level period of the control signal SU6 and goes zero at a time t4 when the additional time Tau has passed since the end t3 of the dead time Td. At this time, the current iL0 satisfies iL0 ≥ iU from the beginning t2 of the dead time Td, and therefore, the current iL0 in the hatched part of the current waveform shown as the fifth waveform from the top of FIG. 2 flows into the resonant capacitor 9U to produce LC resonance. From the end t3 of the dead time Td and on, the current iL0 will be regenerated to the power converter circuit 11 via the third diode 13 directly connected to the resonant inductor L0.

To start producing the LC resonance at the beginning t2 of the dead time Td as described above, the controller 50 determines the additional time Tau based on the output current iU such that iL0 = iU is satisfied at the beginning t2 of the dead time Td. More specifically, using either the detection result of the output current iU by a current sensor or a signal processing value thereof, or an estimated value of the current iU, the inductance L of the resonant inductor L0 that has been stored in advance, and the detection result of the potential V15 at the regenerative capacitor 15, for example, the controller 50 determines the additional time Tau by the equation: Tau = iU × (L/V15). In this case, as the detection result of the output current iU or the signal processing value thereof, either a detection value at a carrier cycle at which the additional time Tau is added or a detection value at a timing closest to the carrier cycle may be used. Also, in this case, as the estimated value of the output current iU, a value of the output current iU estimated at the carrier cycle at which the additional time Tau is added may be used, for example.

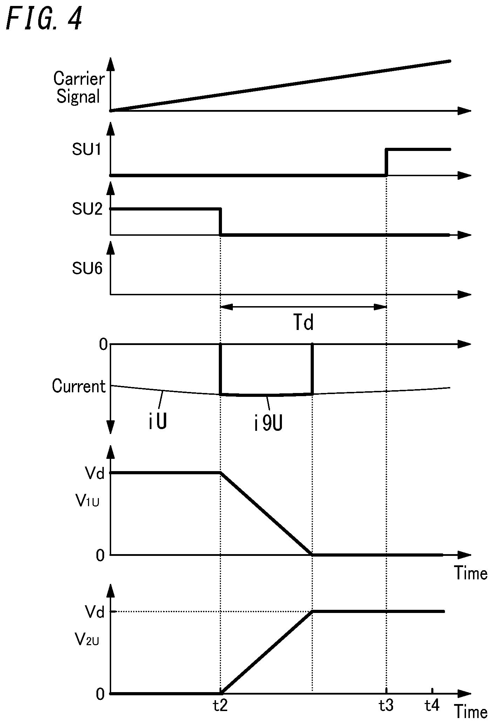

Note that if the polarity of the output current iU is negative as shown in FIG. 4, the power converter 100 may charge the resonant capacitor 9U and make zero-voltage soft switching of the first switching element 1U without turning ON the first IGBT 6U of the switch 8U. In FIG. 4, the voltage V_{1U} across the first switching element 1U and the voltage V_{2U} across the second switching element 2U are also shown. Note that in the case of a discharging operation of discharging electricity from the resonant capacitors 9U, 9V, 9W, the polarities of the currents i9U, i9V, i9W are positive. On the other hand, in the case of a charging operation of charging the resonant capacitors 9U, 9V, 9W with electricity, the polarities of the currents i9U, i9V, i9W are negative. In FIG. 4, the current i9U is also shown.

The additional time Tav is an amount of time that the controller 50 provides to make the high-level period of the control signal SV6 longer than the dead time Td by setting the beginning t5 of the high-level period of the control signal SV6 at a point in time earlier than the beginning t6 of the dead time Td as shown in FIG. 2. The length of the additional time Tav is determined by the value of the output current iV. To start producing LC resonance from the beginning t6 of the dead time Td, it is preferable that the value of the current iL0 agree with the value of the output current iV at the beginning t6 of the dead time Td. This is because as long as iL0 < iV is satisfied, all current flows through the AC load RA1, and therefore, the resonant capacitor 9V cannot be charged. The end of the high-level period of the control signal SV6 may be simultaneous with, or later than, the end t7 of the dead time Td. In the example shown in FIG. 2, the end of the high-level period of the control signal SV6 is set to be simultaneous with the end t7 of the dead time Td. The controller 50 sets the high-level period of the control signal SV6 at Tav + Td. The voltage V_{1V} across the first switching element 1V goes zero at the end t7 of the dead time Td. In the example shown in FIG. 2, the current iL0 starts flowing through the resonant inductor L0 at the beginning t5 of the high-level period of the control signal SV6 and goes zero at a time t8 when the additional time Tav has passed since the end t7 of the dead time Td. At this time, the current iL0 satisfies iL0 ≥ iV from the beginning t6 of the dead time Td and on, and therefore, the current iL0 in the hatched part of the current waveform shown as the tenth waveform from the top of FIG. 2 flows into the resonant capacitor 9V to produce the LC resonance. From the end t7 of the dead time Td and on, the current iL0 will be regenerated to the power converter circuit 11 via the third diode 13 directly connected to the resonant inductor L0.

To start producing the LC resonance at the beginning t6 of the dead time Td as described above, the controller 50 determines the additional time Tav based on the output current iV such that iL0 = iV is satisfied at the beginning t6 of the dead time Td. More specifically, using either the detection result of the output current iV by a current sensor or a signal processing value thereof, or an estimated value of the current iV, the inductance L of the resonant inductor L0 that has been stored in advance, and the detection result of the potential V15 at the regenerative capacitor 15, for example, the controller 50 determines the additional time Tav by the equation: Tav = iV × (L/V15). In this case, as the detection result of the output current iV or the signal processing value thereof, either a detection value at a carrier cycle at which the additional time Tav is added or a detection value at a timing closest to the carrier cycle may be used. Also, in this case, as the estimated value of the output current iV, a value of the output current iV estimated at the carrier cycle at which the additional time Tav is added may be used, for example.

Note that if the polarity of the output current iV is negative, the power converter 100 may charge the resonant capacitor 9V and make zero-voltage soft switching of the first switching element 1 without turning ON the first IGBT 6V of the switch 8V.

The additional time Taw is an amount of time that the controller 50 provides to make the high-level period of the control signal SW6 longer than the dead time Td by setting the beginning t9 of the high-level period of the control signal SW6 at a point in time earlier than the beginning t10 of the dead time Td as shown in FIG. 3. The length of the additional time Taw is determined by the value of the output current iW. To start producing LC resonance from the beginning t10 of the dead time Td, it is preferable that the value of the current iL0 agree with the value of the output current iW at the beginning t10 of the dead time Td. This is because as long as iL0 < iW is satisfied, all current flows through the AC load RA1, and therefore, the resonant capacitor 9W cannot be charged. The end of the high-level period of the control signal SW6 may be simultaneous with, or later than, the end t11 of the dead time Td. In the example shown in FIG. 3, the end of the high-level period of the control signal SW6 is set to be simultaneous with the end t11 of the dead time Td. The controller 50 sets the high-level period of the control signal SW6 at Taw + Td. The voltage V_{1W} across the first switching element 1W goes zero at the end t11 of the dead time Td. In the example shown in FIG. 3, the current iL3 starts flowing through the resonant inductor L0 at the beginning t9 of the high-level period of the control signal SW6 and goes zero at a time t12 when the additional time Taw has passed since the end t11 of the dead time Td. At this time, the current iL0 satisfies iL0 ≥ iW from the beginning t10 of the dead time Td and on, and therefore, the current iL0 in the hatched part of the current waveform shown as the fourth waveform from the top of FIG. 3 flows into the resonant capacitor 9W to produce the LC resonance. From the end t11 of the dead time Td and on, the current iL0 will be regenerated to the power converter circuit 11 via the third diode 13 directly connected to the resonant inductor L0.

The controller 50 determines the additional time Taw based on the output current iW. More specifically, using the detection result of the output current iW by a current sensor, the inductance L of the resonant inductor L0 that has been stored in advance, and the detection result of the potential V15 at the regenerative capacitor 15, for example, the controller 50 determines the additional time Taw by the equation: Taw = iW × (L/V15). In this case, as the detection result of the output current iW or the signal processing value thereof, either a detection value at a carrier cycle at which the additional time Taw is added or a detection value at a timing closest to the carrier cycle may be used. Also, in this case, as the estimated value of the output current iW, a value of the output current iW estimated at the carrier cycle at which the additional time Taw is added may be used, for example.

Note that if the polarity of the output current iW is negative, the power converter 100 may charge the resonant capacitor 9W and make zero-voltage soft switching of the first switching element 1 without turning ON the first IGBT 6W of the switch 8W.

The power converter 100 causes the resonant capacitor 9 and resonant inductor L0 associated with a switching element as the target of zero-voltage soft switching which belongs to the plurality of first switching elements 1 and the plurality of second switching elements 2 to produce resonance. In this case, the voltage across the resonant capacitor 9 associated with the switching element as the target of zero-voltage soft switching varies according to the amplitude of a resonant voltage centered around the potential V15 at the fourth terminal 154 of the regenerative capacitor 15. At this time, the zero-voltage soft switching is done by causing the voltage across the switching element to change from the value Vd of the voltage (refer to FIGS. 2 and 3) of the DC power supply E1 to be applied between the first DC terminal 31 and the second DC terminal 32 to zero. In addition, the potential V15 at the fourth terminal 154 of the regenerative capacitor 15 also varies according to the quantity of electric charges stored in, or removed from, the regenerative capacitor 15 every time the resonant capacitor 9 and the resonant inductor L0 produce resonance. Moreover, the potential V15 at the fourth terminal 154 of the regenerative capacitor 15 also varies according to the quantity of electric charges stored in, or removed from, the regenerative capacitor 15 in every carrier cycle. The quantity of electric charges stored in, or removed from, the regenerative capacitor 15 in association with the output currents iU, iV, iW of the U-, V-, and W-phases is determined every carrier cycle. In this case, the quantity of electric charges stored or removed becomes maximum in association with one of the output currents iU, iV, iW of the U-, V-, and W-phases which has the largest absolute value. Thus, in the power converter 100, the quantity of electric charges stored in, or removed from, the regenerative capacitor 15 changes every carrier cycle. In the power converter 100, however, if the motor as the AC load RA1 is running properly, the output currents iU, iV, iW in respective phases have sinusoidal waves and their phases are different from each other by 120 degrees, thus striking a charging/discharging balance at the regenerative capacitor 15 and reducing the variation in the potential V15 at the fourth terminal 154 of the regenerative capacitor 15.

The controller 50 performs the first control operation by setting the dead time Td between the high-level period of the PWM signal SU1, SV1, SW1 for the first switching element 1U, 1V, 1W and the high-level period of the PWM signal SU2, SV2, SW2 for the second switching element 2U, 2V, 2W with respect to each of the plurality of switching circuits 10. In addition, the controller 50 also performs the first control operation by causing a high-level period of a control signal for each of the plurality of switches 8, corresponding to one of the plurality of switching circuits 10, to overlap with the dead time Td and setting the beginning of the high-level period at a point in time earlier than the beginning of the dead time Td by an additional time.

In the power converter 100, if the controller 50 thereof performed only the first control operation, then any change in the status of the load (such as lock of a motor serving as the AC load RA1) would cause the output currents iU, iV, iW in the respective phases to have respectively different constant values. Then, in the power converter 100, the difference between the potential V15 at the fourth terminal 154 of the regenerative capacitor 15 with respect to the ground potential and one half (Vd/2) of the voltage value Vd of the DC power supply E1 would widen. In that case, in the power converter 100, when the resonant capacitors 9U, 9V, 9W and the resonant inductor L0 are caused to produce resonance to make zero-voltage soft switching, the amplitude of the resonant voltage would decrease too much to have the zero-voltage soft switching done.

Meanwhile, the controller 50 is configured to, when determining that two-phase resonant currents corresponding to two switching circuits 10 belonging to the plurality of switching circuits 10 flow through the resonant inductor L0 simultaneously while performing the first control operation, selectively perform either independent control or simultaneous control.

As used herein, the "independent control" includes the control of shifting, when determining that two-phase resonant currents flow through the resonant inductor L0, the high-level period of at least one of the two control signals for two switches, through which the resonant currents flow, out of the plurality of switches, to prohibit the high-level periods of the two control signals from overlapping with each other.

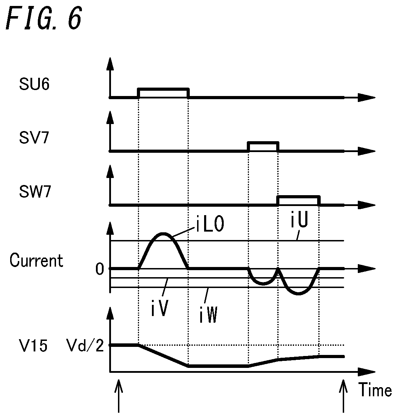

Two control signals SV7, SW7 for two switches 8V, 8W out of the three switches 8U, 8V, 8W are shown in FIG. 6 with respect to a situation where the respective high-level periods of the two control signals SV7, SW7 are shifted not to overlap with each other within one cycle of a carrier signal. In this example, control signals SU6, SV7, SW7, a plurality of output currents iU, iV, iW, a current iL0 flowing through the resonant inductor L0, and the potential V15 at the fourth terminal 154 of the regenerative capacitor 15 are shown in FIG. 6 with respect to a situation where lock of a motor as an exemplary AC load RA1 causes the output currents iU, iV, iW to have respectively different constant values. In FIG. 6, absolute value of output current iU > absolute value of output current iW > absolute value of output current iV is satisfied and high-level period of control signal SU7 > high-level period of control signal SW6 > high-level period of control signal SV6 is satisfied. The amplitude of the current iL0 becomes maximum during the high-level period of the control signal SU6 for the switch 8U corresponding to the output current iU, of which the absolute value is maximum in the plurality of output currents iU, iV, iW. Consequently, the magnitude of variation in the potential V15 at the regenerative capacitor 15 becomes maximum during the high-level period of the control signal SU6 among the respective high-level periods of the control signals SU6, SV7, SW7.

As used herein, the "simultaneous control" includes the control of allowing, when determining that two-phase resonant currents flow through the resonant inductor L0, the high-level periods of two control signals for two switches, through which the resonant currents flow, out of the plurality of switches, to overlap with each other. Also, as used herein, the phrase "to allow the high-level periods of two control signals to overlap with each other" is not limited to allowing the entire high-level period of a first control signal, which is one of the two control signals, and the entire high-level period of a second control signal, which is the other control signal, to overlap with each other. Rather, the phrase "to allow the high-level periods of two control signals to overlap with each other" may also refer to allowing at least only a part of the high-level period of the first control signal, corresponding to the entire dead time Td between two PWM signals for determining the high-level period of the first control signal, and only a part of the high-level period of the second control signal, corresponding to the entire dead time Td between two PWM signals for determining the high-level period of the second control signal, to overlap with each other.

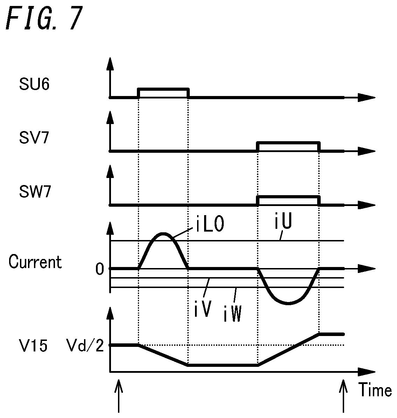

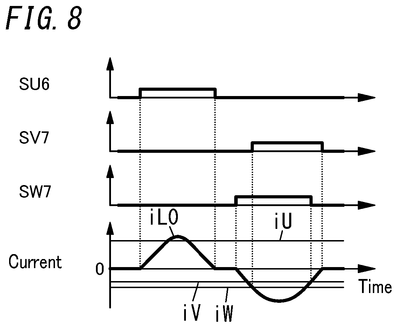

Two control signals SV7, SW7 for two switches 8V, 8W out of the three switches 8U, 8V, 8W are shown in FIGS. 7 and 8 with respect to a situation where the respective high-level periods of the two control signals SV7, SW7 are shifted to overlap with each other within one cycle of a carrier signal. In this example, control signals SU6, SV7, SW7, a plurality of output currents iU, iV, iW, and a current iL0 flowing through the resonant inductor L0 are shown in FIGS. 7 and 8 with respect to a situation where lock of a motor as an exemplary AC load RA1 causes the output currents iU, iV, iW to have respectively different constant values. The potential V15 at the fourth terminal 154 of the regenerative capacitor 15 is also shown in FIG. 7. In FIGS. 7 and 8, absolute value of output current iU > absolute value of output current iW > absolute value of output current iV is satisfied. In FIG. 7, high-level period of control signal SU7 = high-level period of control signal SW7 is satisfied. The amplitude of the current iL0 becomes maximum during a period in which the respective high-level periods of the two control signals SV7, SW7, which are allowed to overlap with each other, overlap with each other. Consequently, the magnitude of variation in the potential V15 at the regenerative capacitor 15 becomes maximum during the period, in which the respective high-level periods of the two control signals SV7, SW7 out of the three control signals SU6, SV7, SW7, overlap with each other.

Thus, the controller 50 of the power converter 100 acquires the potential V15 detected at the fourth terminal 154 of the regenerative capacitor 15. The controller 50 may acquire the detected potential every cycle of the carrier signal, for example. The controller 50 may store in advance the value Vd of the DC voltage applied between the first DC terminal 31 and the second DC terminal 32, for example, or acquire the detection result of the voltage value Vd. The controller 50 determines the specifics of the control operation in accordance with the potential detected at the fourth terminal 154 of the regenerative capacitor 15, the value of Vd/2, and the detection results of the output currents iU, iV, iW.

The controller 50 selectively performs, according to the potential detected at the fourth terminal 154 of the regenerative capacitor 15 and the respective polarities of the plurality of output currents iU, iV, iW supplied from the plurality of AC terminals 41, either the second control operation or the third control operation. As used herein, the "potential detected at the fourth terminal 154 of the regenerative capacitor 15" refers to the potential V15 detected at the fourth terminal 154 of the regenerative capacitor 15 with respect to the ground potential. The second control operation is the operation of performing simultaneous control on two switches 8 belonging to the plurality of switches 8. The third control operation is the operation of performing independent control on two switches 8 belonging to the plurality of switches 8.

The controller 50 performs the second control operation including shifting the respective high-level periods of the two control signals for the two switches 8 belonging to the plurality of switches 8 to allow the high-level periods to overlap with each other.

The controller 50 performs the third control operation including shifting the respective high-level periods of the two control signals for the two switches 8 belonging to the plurality of switches 8 to prohibit the high-level periods from overlapping with each other. **In** the third control operation, the end of the high-level period of a first control signal as one of the two control signals and the beginning of the high-level period of a second control signal as the other control signal may be simultaneous with each other as shown in FIG. 6, for example. However, this is only an example and should not be construed as limiting. Alternatively, after the high-level period of the first control signal has ended, the high-level period of the other, second control signal may begin. The controller 50 performs the third control operation by prohibiting the respective high-level periods of the control signals for the plurality of switches 8 from overlapping with each other.

The controller 50 performs the second control operation when either a first condition or a second condition is satisfied and performs the third control operation when either a third condition or a fourth condition is satisfied.

The first condition is that the potential detected at the fourth terminal 154 of the regenerative capacitor 15 be less than a first threshold value Vth1 and the product of the plurality of output currents iU, iV, iW (i.e., iU × iV × iW) be positive. When iU × iV × iW is calculated, iU, iV, iW are instantaneous values and are each a positive value, zero, or a negative value. The second condition is that the potential detected at the fourth terminal 154 of the regenerative capacitor 15 be greater than a second threshold value Vth2 and the product of the plurality of output currents iU, iV, iW be negative. The third condition is that the potential detected at the fourth terminal 154 of the regenerative capacitor 15 be less than the first threshold value Vth1 and the product of the plurality of output currents iU, iV, iW be negative. The fourth condition is that the potential detected at the fourth terminal 154 of the regenerative capacitor 15 be greater than the second threshold value Vth2 and the product of the plurality of output currents iU, iV, iW be positive. The first threshold value Vth1 is less than one half (i.e., Vd/2) of the value Vd of the voltage applied between the first DC terminal 31 and the second DC terminal 32. The second threshold value Vth2 is greater than Vd/2. The first threshold value Vth1 may be 90% of Vd/2, for example. The second threshold value Vth2 may be 110% of Vd/2, for example. The controller 50 performs the first control operation described above when the potential detected at the fourth terminal 154 of the regenerative capacitor 15 is equal to or greater than the first threshold value Vth1 and equal to or less than the second threshold value Vth2.

The following Table 1 summarizes the relationship between the first, second, third, and fourth conditions, the second control operation (i.e., two-phase simultaneous control), and the third control operation (i.e., two-phase independent control).

**[Table 1]**

| | Detected potential < Vth1 | Detected potential > Vth2 |
|---|---|---|
| iU×iV×iW > 0 | Two-phase simultaneous control when first condition is satisfied | Two-phase independent control when fourth condition is satisfied |
| iU×iV×iW < 0 | Two-phase independent control when third condition is satisfied | Two-phase simultaneous control when second condition is satisfied |

Note that "iU × iV × iW" is the product calculated when the polarity of each of the plurality of output currents iU, iV, iW is defined to be positive if the output current flows in the direction indicated by the arrow in FIG. 1 and defined to be negative if the output current iU, iV, iW flows in the direction opposite from the one indicated by the arrow in FIG. 1. Alternatively, "iU × iV × iW" may be replaced with sgn (iU) × sgn (iV) × sgn (iW). In that case, if the value of sgn (iU) × sgn (iV) × sgn (iW) is positive, the product of the plurality of output currents iU, iV, iW may be determined to be positive. If the value of sgn (iU) × sgn (iV) × sgn (iW) is "-1," the product of the plurality of output currents iU, iV, iW may be determined to be negative.

As described above, the first control operation is the operation including allowing a high-level period of a control signal for each of the plurality of switches 8, corresponding to one of the plurality of switching circuits 10, to overlap with the dead time Td and setting the beginning of the high-level period at a point in time earlier by an additional time than the beginning of the dead time Td. The high-level period of the control signal for the switch 8U is either a period in which the potential level of the control signal SU6 for the first IGBT 6U has high level or a period in which the potential level of the control signal SU7 for the second IGBT 7U has high level. The high-level period of the control signal for the switch 8V is either a period in which the potential level of the control signal SV6 for the first IGBT 6V has high level or a period in which the potential level of the control signal SV7 for the second IGBT 7V has high level. The high-level period of the control signal for the switch 8W is either a period in which the potential level of the control signal SW6 for the first IGBT 6W has high level or a period in which the potential level of the control signal SW7 for the second IGBT 7W has high level. The additional time by which the beginning of the high-level period of the control signal for the switch 8U is made earlier than the beginning of the dead time Td is the additional time Tau described above. The additional time by which the beginning of the high-level period of the control signal for the switch 8V is made earlier than the beginning of the dead time Td is the additional time Tav described above. The additional time by which the beginning of the high-level period of the control signal for the switch 8W is made earlier than the beginning of the dead time Td is the additional time Taw described above.

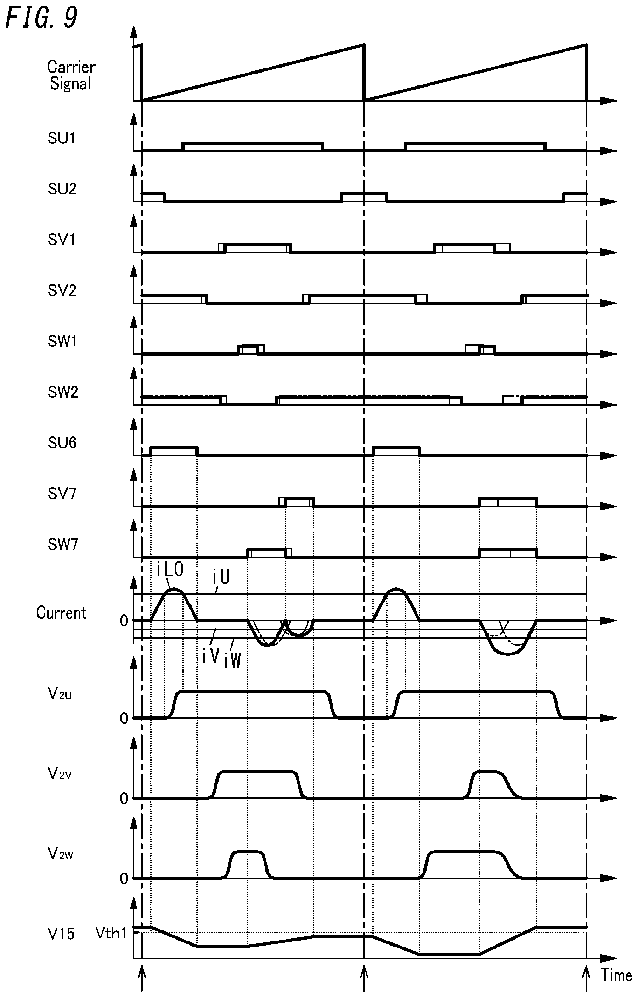

As described above, the controller 50 performs the second control operation when determining that either the first condition or the second condition be satisfied and performs the third control operation when determining that either the third condition or the fourth condition be satisfied. An example of the second control operation and an example of the third control operation will be described with reference to FIGS. 9-12.

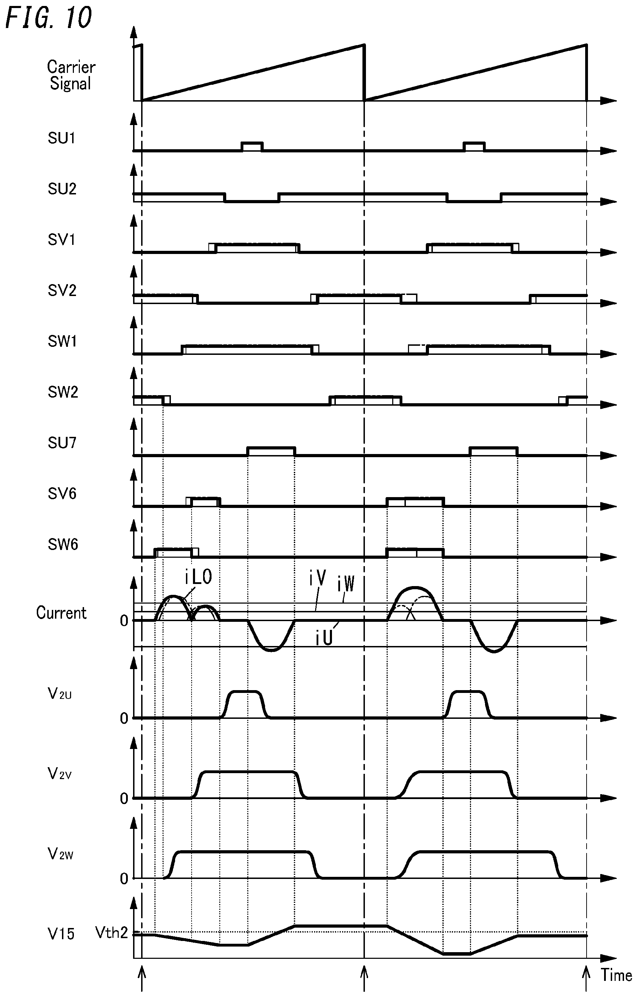

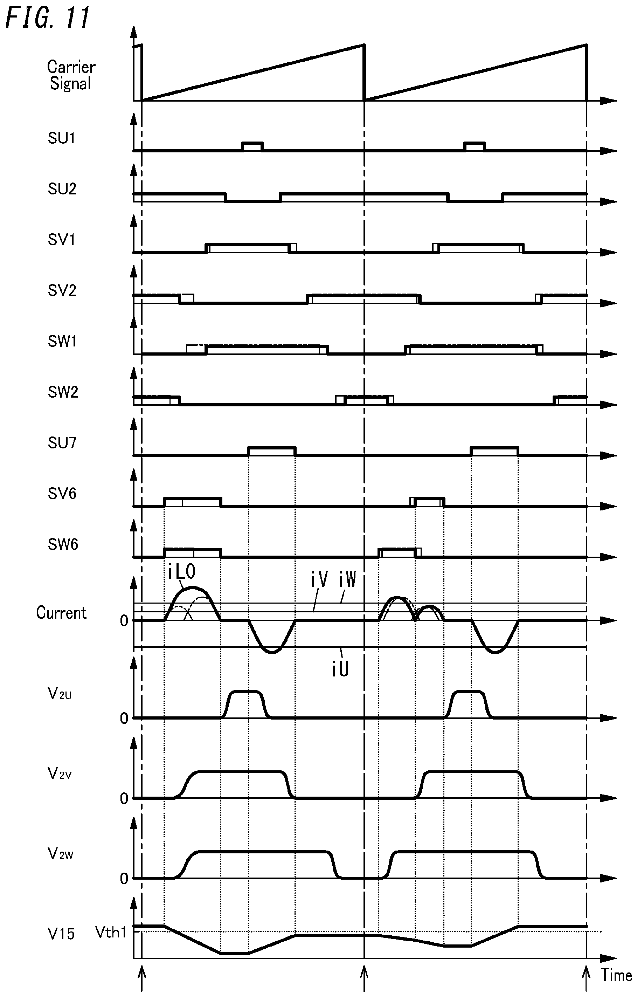

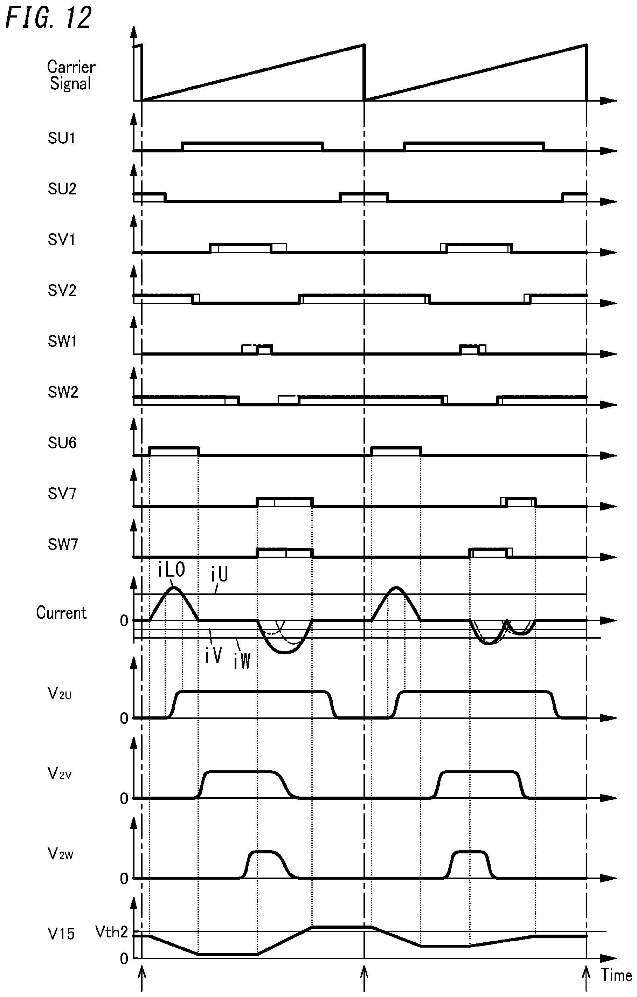

FIG. 9 is a timing chart illustrating an exemplary situation where the controller 50 performs the second control operation (i.e., two-phase simultaneous control) by determining that the first condition be satisfied. FIG. 10 is a timing chart illustrating an exemplary situation where the controller 50 performs the second control operation (i.e., two-phase simultaneous control) by determining that the second condition be satisfied. FIG. 11 is a timing chart illustrating an exemplary situation where the controller 50 performs the third control operation (i.e., two-phase independent control) when determining that the third condition be satisfied. FIG. 12 is a timing chart illustrating an exemplary situation where the controller 50 performs the third control operation (i.e., two-phase independent control) by determining that the fourth condition be satisfied.

The six PWM signals SU1, SU2, SV1, SV2, SW1, SW2 and three control signals out of the six control signals SU6, SU7, SV6, SV7, SW6, SW7 are shown in FIGS. 9-12. In addition, the current iL0, the three output currents iU, iV, iW, the voltages V_{2U}, V_{2V}, V_{2W} across the three second switching elements 2U, 2V, 2W, and the potential V15 at the fourth terminal 154 of the regenerative capacitor 15 are also shown in FIGS. 9-12. In FIGS. 9-12, as for each of the PWM signals SU1, SU2, SV1, SV2, SW1, SW2 and three control signals SU6, SV7, SV7, if the high-level period thereof has been changed, their state before the change is indicated by the two-dot chain. If the controller 50 has shifted the high-level period of the control signal (SU6, SU7, SV6, SV7, SW6, SW7), then the controller 50 also changes the high-level periods of the PWM signals (SU1, SU2, SV1, SV2, SW1, SW2) associated with the control signal. Specifically, the PWM signals associated with the control signal SU6 are the PWM signals SU1, SU2. The PWM signals associated with the control signal SU7 are the PWM signals SU1, SU2. The PWM signals associated with the control signal SV6 are the PWM signals SV1, SV2. The PWM signals associated with the control signal SV7 are the PWM signals SV1, SV2. The PWM signals associated with the control signal SW6 are the PWM signals SW1, SW2. The PWM signals associated with the control signal SW7 are the PWM signals SW1, SW2. Also, in FIGS. 9-12, if the high-level period of any of the three control signals SU6, SV7, SV7 has been changed, then the current iL0 flowing through the resonant inductor L0 before the high-level period is changed is indicated by the two-dot chain. Furthermore, in FIGS. 9-12, the timing of detecting the potential V15 at the fourth terminal 154 of the regenerative capacitor 15 is indicated by the arrow. The potential V15 at the fourth terminal 154 of the regenerative capacitor 15 is detected every carrier cycle. This allows the controller 50 to acquire the potential detected at the fourth terminal 154 of the regenerative capacitor 15 in every cycle of the carrier cycle. The timing for the controller 50 to acquire the potential detected at the fourth terminal 154 of the regenerative capacitor 15 may be, but does not have to be, simultaneous with the timing of detecting the potential V15 at the fourth terminal 154 of the regenerative capacitor 15., for example.

In the example shown in FIG. 9, if the potential detected at the fourth terminal 154 of the regenerative capacitor 15 is less than the first threshold value Vth1, then the product of the three output currents iU, iV, iW is positive. Thus, in that case, the controller 50 performs the second control operation to allow the respective high-level periods of the control signals SV7, SW7 to overlap with each other. As a result, in the power converter 100, the amplitude of the current iL0 flowing through the resonant inductor L0 increases and the quantity of electric charges stored into the regenerative capacitor 15 increases, thus enabling making the potential V15 at the fourth terminal 154 of the regenerative capacitor 15 equal to or greater than the first threshold value Vth1. This allows the power converter 100 to perform soft switching of the three first switching elements 1 and the three second switching elements 2.

In the example shown in FIG. 10, if the potential detected at the fourth terminal 154 of the regenerative capacitor 15 is greater than the second threshold value Vth2, then the product of the three output currents iU, iV, iW is negative. Thus, in that case, the controller 50 performs the second control operation to allow the respective high-level periods of the control signals SV6, SW6 to overlap with each other. As a result, in the power converter 100, the amplitude of the current iL0 flowing through the resonant inductor L0 increases and the quantity of electric charges extracted into the regenerative capacitor 15 increases, thus enabling making the potential V15 at the fourth terminal 154 of the regenerative capacitor 15 equal to or less than the second threshold value Vth2. This allows the power converter 100 to perform soft switching of the three first switching elements 1 and the three second switching elements 2.

In the example shown in FIG. 11, if the potential detected at the fourth terminal 154 of the regenerative capacitor 15 is less than the first threshold value Vth1, then the product of the three output currents iU, iV, iW is negative. Thus, in that case, the controller 50 performs the third control operation to prohibit the respective high-level periods of the control signals SV7, SW7 from overlapping with each other. As a result, in the power converter 100, the quantity of electric charges stored into the regenerative capacitor 15 increases, thus enabling making the potential V15 at the fourth terminal 154 of the regenerative capacitor 15 equal to or greater than the first threshold value Vth1. This allows the power converter 100 to perform soft switching of the three first switching elements 1 and the three second switching elements 2.

In the example shown in FIG. 12, if the potential detected at the fourth terminal 154 of the regenerative capacitor 15 is greater than the second threshold value Vth2, then the product of the three output currents iU, iV, iW is positive. Thus, in that case, the controller 50 performs the third control operation to prohibit the respective high-level periods of the control signals SV7, SW7 from overlapping with each other. As a result, in the power converter 100, the amplitude of the current iL0 flowing through the resonant inductor L0 decreases if the polarity of the current iL0 is negative, thus enabling making the potential V15 at the fourth terminal 154 of the regenerative capacitor 15 equal to or less than the second threshold value Vth2. This allows the power converter 100 to perform soft switching of the three first switching elements 1 and the three second switching elements 2.

Note that the second and third control operations performed by the controller 50 may include control of not shifting the respective high-level periods of two control signals for two switches 8 belonging to the plurality of switches 8.

### (4) Recapitulation

In the power converter 100 according to the first embodiment, the controller 50 performs a first control operation including allowing a high-level period of a control signal for each of the plurality of switches 8, corresponding to one of the plurality of switching circuits 10, to overlap with the dead time Td and setting the beginning of the high-level period at a point in time earlier by an additional time than the beginning of the dead time Td. This allows the power converter 100 to make zero-voltage soft switching of each of the plurality of first switching elements 1 and the plurality of second switching elements 2. In addition, the controller 50 of the power converter 100 selectively performs, according to a potential detected at the fourth terminal 154 of the regenerative capacitor 15 and polarities of a plurality of output currents iU, iV, iW supplied from the plurality of AC terminals 41, either a second control operation including performing simultaneous control on two switches 8 belonging to the plurality of switches 8 or a third control operation including performing independent control on two switches 8 belonging to the plurality of switches 8. This allows the power converter 100 to reduce the variation in the potential V15 at the regenerative capacitor 15. In addition, this increases the proportion of soft switching compared to a situation where nothing is performed in response to the variation in the potential V15 at the regenerative capacitor 15, thus eventually contributing to improving the power conversion efficiency and reducing noise.

Also, in the power converter 100 according to the first embodiment, the controller 50 performs the second control operation when either the first condition or the second condition is satisfied and performs the third control operation when either the third condition or the fourth condition is satisfied. This allows the power converter 100 according to the first embodiment to reduce the variation in the potential V15 at the regenerative capacitor 15 irrespective of the polarities of the plurality of output currents iU, iV, iW supplied from the plurality of AC terminals 41.

Furthermore, in the power converter 100 according to the first embodiment, the controller 50 performs the second control operation by allowing the respective high-level periods of the two control signals for the two switches 8 belonging to the plurality of switches 8 to overlap with each other by shifting the high-level periods of the two control signals. This allows the power converter 100 to increase the absolute value of a current iL0 flowing through the resonant inductor L0, thus enabling increasing the magnitude of regulation (i.e., the magnitude of variation) of the potential V15 at the regenerative capacitor 15.

Furthermore, in the power converter 100 according to the first embodiment, the controller 50 performs the third control operation by prohibiting the respective high-level periods of the two control signals for the two switches 8 belonging to the plurality of switches 8 from overlapping with each other by shifting the high-level periods of the two control signals. This allows the power converter 100 to decrease the absolute value of the current iL0 flowing through the resonant inductor L0.

### (First variation)

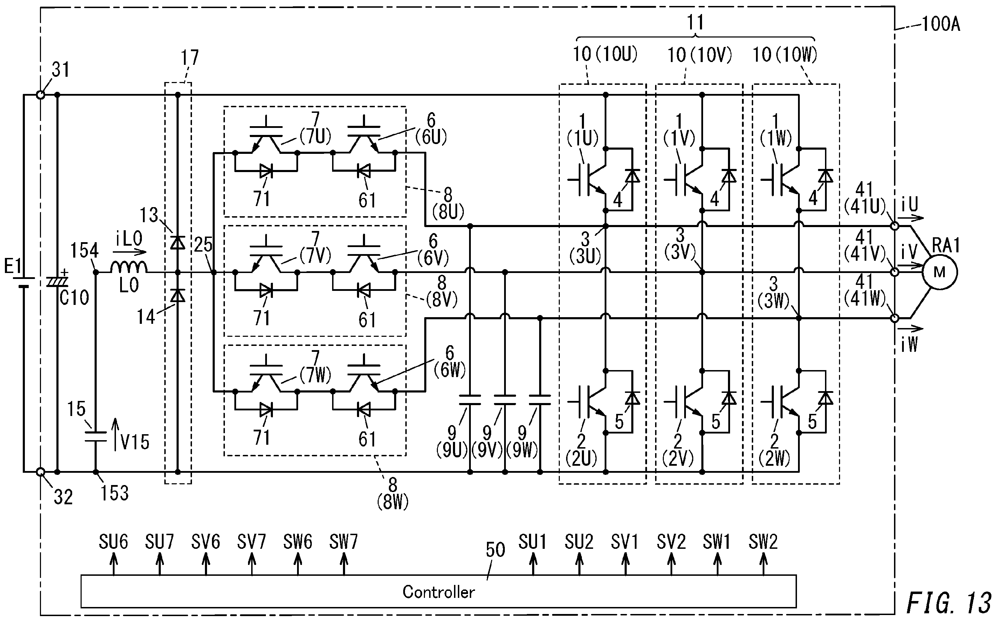

A power converter 100A according to a first variation of the first embodiment will be described with reference to FIG. 13. In the following description, any constituent element of the power converter 100A according to the first variation of the first embodiment, having the same function as a counterpart of the power converter 100 (refer to FIG. 1) according to the first embodiment described above, will be designated by the same reference numeral as that counterpart's, and description thereof will be omitted herein.

In the power converter 100A according to the first variation, in each of the plurality of switches 8, the first IGBT 6 and second IGBT 7 thereof are connected in anti-series. In the power converter 100A according to the first variation, in each of the plurality of switches 8, the collector terminal of the first IGBT 6 and the collector terminal of the second IGBT 7 are connected to each other, the emitter terminal of the first IGBT 6 is connected to the connection node 3 of a corresponding one of the plurality of switching circuits 10, and the emitter terminal of the second IGBT 7 is connected to the common connection node 25. In addition, each of the plurality of switches 8 further includes a diode 61 connected to the first IGBT 6 in antiparallel and a diode 71 connected to the second IGBT 7 in antiparallel.

In the power converter 100A according to the first variation, each of the first IGBT 6 and the second IGBT 7 may be replaced with either a MOSFET or a bipolar transistor. In that case, the diode 61 and diode 71 shown in FIG. 26 may be each replaced with, for example, either a parasitic diode of the replacement element or an element built in one chip of the replacement element. Also, in the power converter 100A according to the first variation, the diode 61 and the diode 71 do not have to be provided as external elements for the first IGBT 6 and the second IGBT 7, respectively, but may also be elements built in one chip.

### (Second variation)

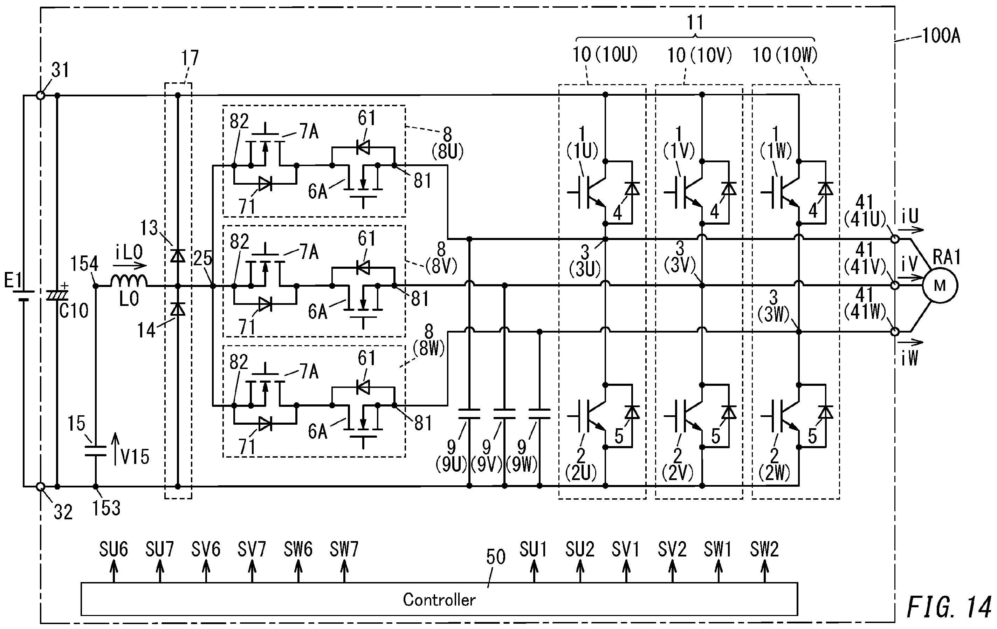

A power converter 100A according to a second variation of the first embodiment will be described with reference to FIG. 14. In the following description, any constituent element of the power converter 100A according to the second variation of the first embodiment, having the same function as a counterpart of the power converter 100 (refer to FIG. 1) according to the first embodiment described above, will be designated by the same reference numeral as that counterpart's, and description thereof will be omitted herein.

In the power converter 100A according to the second variation, in each of the switches 8, a first MOSFET 6A and a second MOSFET 7A are connected in anti-series. In the power converter 100A according to the second variation, in each of the plurality of switches 8, the drain terminal of the first MOSFET 6A and the drain terminal of the second MOSFET 7A are connected to each other. In addition, each of the plurality of switches 8 further includes a diode 61 connected to the first MOSFET 6A in antiparallel and a diode 71 connected to the second MOSFET 7A in antiparallel. In each of the plurality of switches 8, the source terminal of the second MOSFET 7A is connected to the common connection node 25. In each of the plurality of switches 8, the source terminal of the first MOSFET 6A is connected to the connection node 3 of a switching circuit 10 corresponding to the switch 8 including the first MOSFET 6A. Control signals SU6, SU7 are respectively applied from the controller 50 to the first MOSFET 6A and second MOSFET 7A of the switch 8U. Control signals SV6, SV7 are respectively applied from the controller 50 to the first MOSFET 6A and second MOSFET 7A of the switch 8V. Control signals SW6, SW7 are respectively applied from the controller 50 to the first MOSFET 6A and second MOSFET 7A of the switch 8W.

### (Third variation)

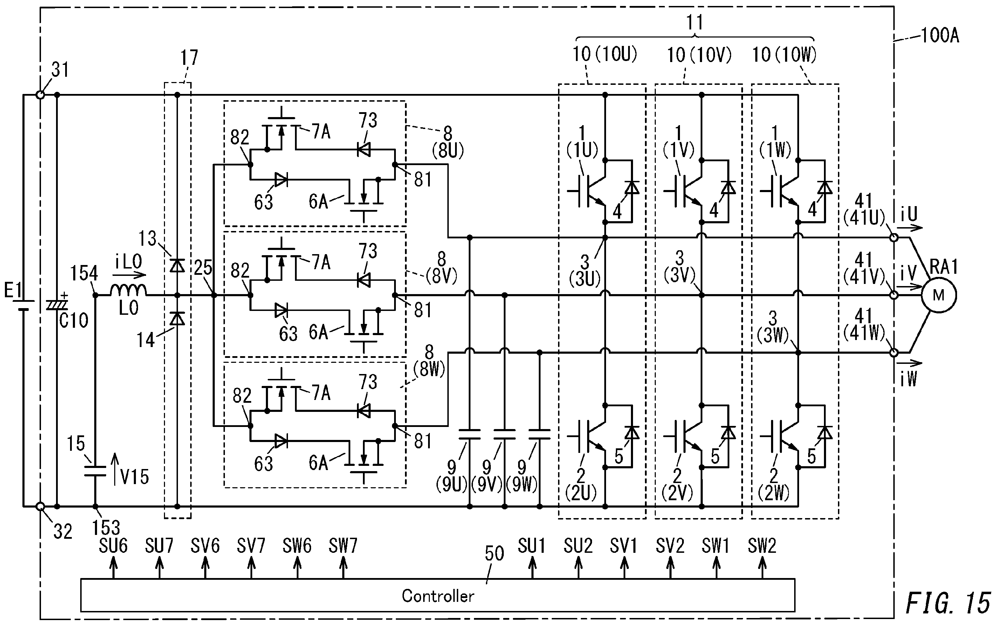

A power converter 100A according to a third variation of the first embodiment will be described with reference to FIG. 15. In the following description, any constituent element of the power converter 100A according to the third variation of the first embodiment, having the same function as a counterpart of the power converter 100 (refer to FIG. 1) according to the first embodiment described above, will be designated by the same reference numeral as that counterpart's, and description thereof will be omitted herein.

In the power converter 100A according to the third variation, in each of the plurality of switches 8, a diode 63 is connected to a first MOSFET 6A in series and a diode 73 is connected to a second MOSFET 7A in series. In the power converter 100A according to the third variation, a series circuit of the first MOSFET 6A and the diode 63 and a series circuit of the second MOSFET 7A and the diode 73 are connected to each other in antiparallel.

### (Fourth variation)

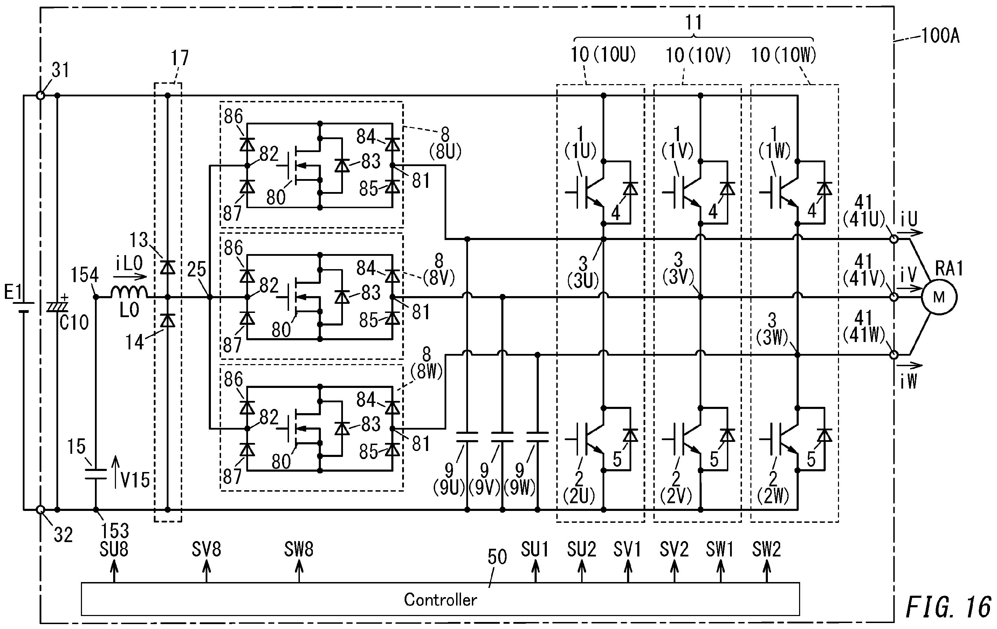

A power converter 100A according to a fourth variation of the first embodiment will be described with reference to FIG. 16. In the following description, any constituent element of the power converter 100A according to the fourth variation of the first embodiment, having the same function as a counterpart of the power converter 100 (refer to FIG. 1) according to the first embodiment described above, will be designated by the same reference numeral as that counterpart's, and description thereof will be omitted herein.

In the power converter 100A according to the fourth variation, each of the plurality of switches 8 includes: a MOSFET 80; a diode 83 connected to the MOSFET 80 in antiparallel; a series circuit of two diodes 84, 85 connected to the MOSFET 80 in antiparallel; and a series circuit of two diodes 86, 87 connected to the MOSFET 80 in antiparallel. In each of the plurality of switches 8, the connection node between the diodes 84, 85 in the switch 8 (i.e., the first terminal 81 of the switch 8) is connected to the connection node 3 of a corresponding one of the plurality of switching circuits 10, and a connection node between the diodes 86, 87 (i.e., the second terminal 82 of the switch 8) is connected to the common connection node 25. In each of the switches 8, when the MOSFET 80 is ON, the switch 8 is ON. On the other hand, when the MOSFET 80 is OFF, the switch 8 is OFF.

The MOSFETs 80 of the plurality of switches 8 are controlled by the controller 50. The controller 50 outputs a control signal SU8 for controlling the ON/OFF states of the MOSFET 80 of the switch 8U, a control signal SV8 for controlling the ON/OFF states of the MOSFET 80 of the switch 8V, and a control signal SW8 for controlling the ON/OFF states of the MOSFET 80 of the switch 8W.

In the switch 8, when the MOSFET 80 is ON, a resonant current produced by a resonant circuit including the resonant inductor L0 and the resonant capacitor 9 flows. In the power converter 100A, a charging current including the resonant current flows, when one of the plurality of switches 8 is ON, along the path passing through the regenerative capacitor 15, the resonant inductor L0, the diode 86, the MOSFET 80, the diode 85, and the resonant capacitor 9 in this order. Also, in the power converter 100A, a discharging current including the resonant current flows, when one of the plurality of switches 8 is ON, along the path passing through the resonant capacitor 9, the diode 84, the MOSFET 80, the diode 87, the resonant inductor L0, and regenerative capacitor 15 in this order.

In the power converter 100A according to the fourth variation, each of the plurality of MOSFETs 80 may be replaced with an IGBT. Also, in the power converter 100A according to the fourth variation, each of the plurality of switches 8 may include, for example, a bipolar transistor or a GaN-based gate injection transistor (GIT) instead of the MOSFET 80.

### (Fifth variation)

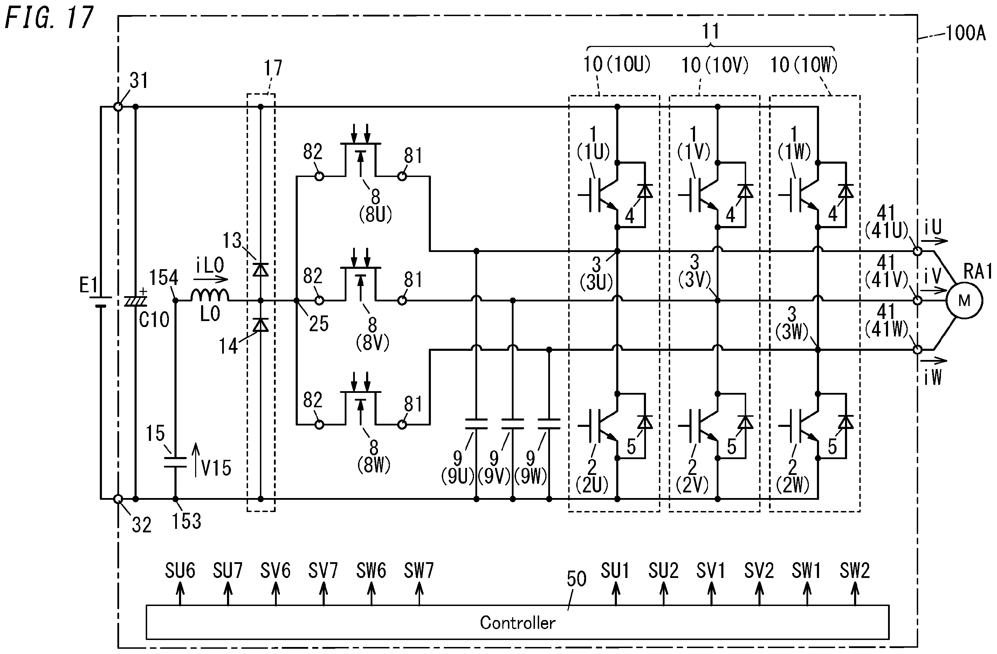

A power converter 100A according to a fifth variation of the first embodiment will be described with reference to FIG. 17. In the following description, any constituent element of the power converter 100A according to the fifth variation of the first embodiment, having the same function as a counterpart of the power converter 100 (refer to FIG. 1) according to the first embodiment described above, will be designated by the same reference numeral as that counterpart's, and description thereof will be omitted herein.

In the power converter 100 according to the fifth variation, each of the plurality of switches 8 is a dual-gate GaN-based GIT including a first source terminal, a first gate terminal, a second gate terminal, and a second source terminal. In the power converter 100A according to the fifth variation, a control signal SU6 is applied between the first gate terminal and first source terminal of a dual-gate GaN-based GIT serving as the switch 8U, and a control signal SU7 is applied between the second gate terminal and the second source terminal thereof. In addition, a control signal SV6 is applied between the first gate terminal and first source terminal of a dual-gate GaN-based GIT serving as the switch 8V, and a control signal SV7 is applied between the second gate terminal and the second source terminal thereof. Furthermore, a control signal SW6 is applied between the first gate terminal and first source terminal of a dual-gate GaN-based GIT serving as the switch 8W, and a control signal SW7 is applied between the second gate terminal and the second source terminal thereof.

### (Second embodiment)

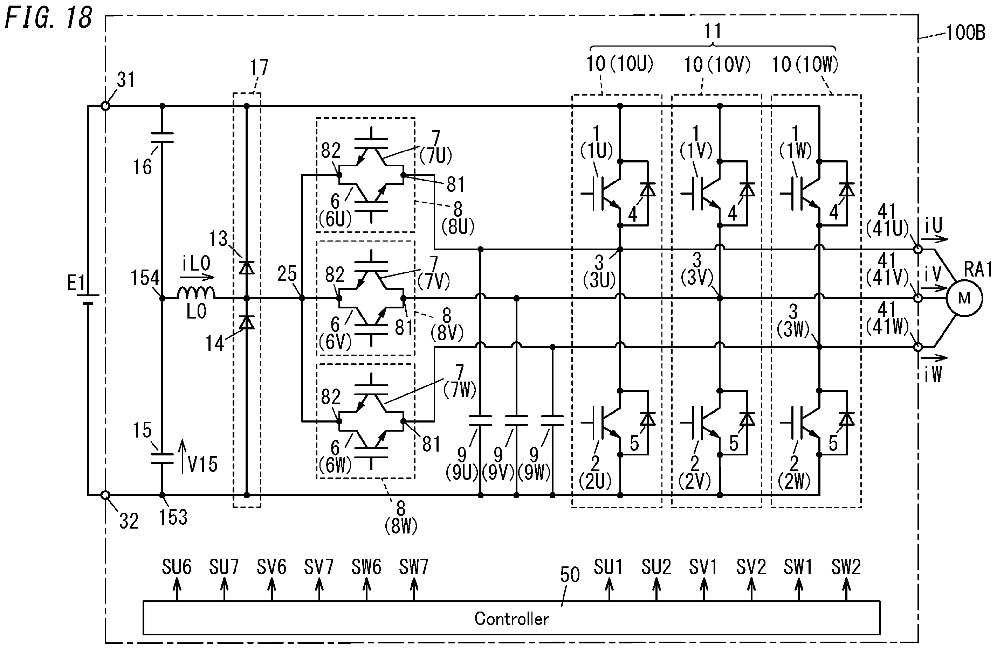

A power converter 100B according to a second embodiment will be described with reference to FIG. 18. The power converter 100B according to the second embodiment further includes a capacitor 16 connected between the second terminal of the resonant inductor L0 and the first DC terminal 31, which is a difference from the power converter 100 (refer to FIG. 1) according to the first embodiment. In the following description, any constituent element of the power converter 100B according to the second embodiment, having the same function as a counterpart of the power converter 100 according to the first embodiment described above, will be designated by the same reference numeral as that counterpart's, and description thereof will be omitted herein.

The power converter 100B does not include the capacitor C10 of the power converter 100A according to the first embodiment. The capacitor 16 is connected to the regenerative capacitor 15 in series. Thus, in this power converter 100B, a series circuit of the capacitor 16 and the regenerative capacitor 15 is connected between the first DC terminal 31 and the second DC terminal 32. The capacitance of the capacitor 16 is the same as the capacitance of the regenerative capacitor 15. As used herein, the expression "the capacitance of the capacitor 16 is the same as the capacitance of the regenerative capacitor 15" refers to not only a situation where the capacitance of the capacitor 16 is exactly equal to the capacitance of the regenerative capacitor 15 but also a situation where the capacitance of the capacitor 16 is equal to or greater than 95% and equal to or less than 105% of the capacitance of the regenerative capacitor 15 as well.

In the power converter 100B according to the second embodiment, the potential V15 at the fourth terminal 154 of the regenerative capacitor 15 has a value calculated by dividing the voltage value Vd of the DC power supply E1 by two that is the number of the capacitors, namely, the capacitor 16 and the regenerative capacitor 15. Thus, the potential V15 at the fourth terminal 154 of the regenerative capacitor 15 is Vd/2. In the power converter 100B according to the second embodiment, the controller 50 may store in advance the value of the potential V15 at the fourth terminal 154 of the regenerative capacitor 15.

The controller 50 of the power converter 100B according to the second embodiment, as well as the controller 50 of the power converter 100 according to the first embodiment, performs the first control operation, the second control operation, and the third control operation. Thus, the power converter 100B according to the second embodiment, as well as the power converter 100A according to the second embodiment, may contribute to improving the power conversion efficiency.

### (Third embodiment)

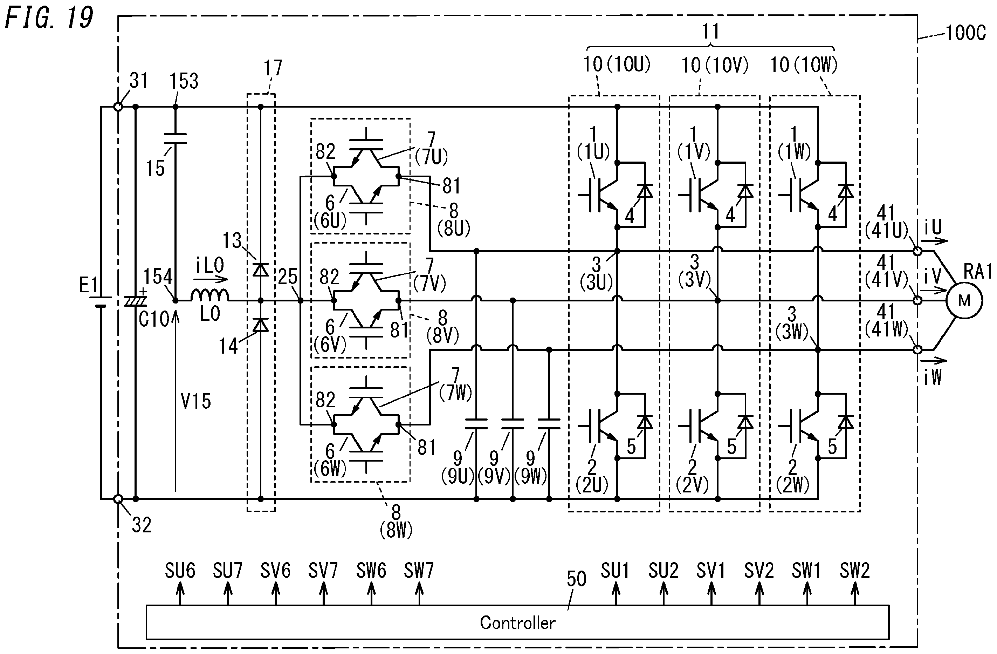

A power converter 100C according to a third embodiment will be described with reference to FIG. 19. In the power converter 100C according to the third embodiment, the regenerative capacitor 15 is connected between the second terminal of the resonant inductor L0 and the first DC terminal 31, which is a difference from the power converter 100 (refer to FIG. 1) according to the first embodiment. In the following description, any constituent element of the power converter 100C according to this third embodiment, having the same function as a counterpart of the power converter 100 according to the first embodiment described above, will be designated by the same reference numeral as that counterpart's, and description thereof will be omitted herein.

The controller 50 of the power converter 100C according to the third embodiment, as well as the controller 50 of the power converter 100 according to the first embodiment, performs the first control operation, the second control operation, and the third control operation. Thus, the power converter 100C according to the third embodiment, as well as the power converter 100 according to the first embodiment, may contribute to improving the power conversion efficiency.

### (Fourth embodiment)

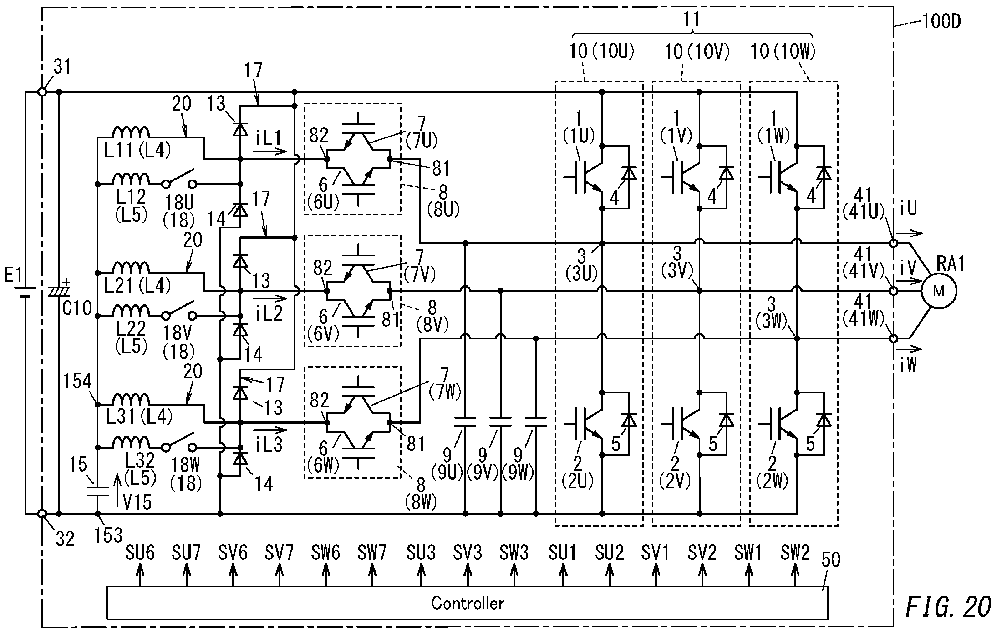

A power converter 100D according to a fourth embodiment will be described with reference to FIG. 20. In the following description, any constituent element of the power converter 100D according to this fourth embodiment, having the same function as a counterpart of the power converter 100 (refer to FIG. 1) according to the first embodiment described above, will be designated by the same reference numeral as that counterpart's, and description thereof will be omitted herein.

In the power converter 100D, the fourth terminal 154 of the regenerative capacitor 15 is connected to a plurality of resonant circuits 20. Each of the plurality of resonant circuits 20 includes a resonant capacitor 9 and a resonant inductor L4. The resonant capacitor 9 is connected between the first terminal 81 of a corresponding one of the plurality of switches 8 and the second DC terminal 32. The resonant inductor L4 is connected between the second terminal 82 of a corresponding one of the plurality of switches 8 and the fourth terminal 154 of the regenerative capacitor 15. In the following description, the resonant inductor L4 connected to the switch 8U will be hereinafter referred to as a "resonant inductor L11," the resonant inductor L4 connected to the switch 8V will be hereinafter referred to as a "resonant inductor L21," and the resonant inductor L4 connected to the switch 8W will be hereinafter referred to as a "resonant inductor L31." The respective inductances of the resonant inductors L11, L21, L31 are the same as each other.

Each of the plurality of resonant circuits 20 includes: a second resonant inductor L5, separately provided from a first resonant inductor L4 serving as the resonant inductor L4; and a selector switch 18 connected to the second resonant inductor L5. In each of the plurality of resonant circuits 20, a series circuit of the second resonant inductor L5 and the selector switch 18 is connected to the first resonant inductor L4 in parallel. Each of the plurality of resonant circuits 20 has a resonant frequency that changes as the selector switch 18 turns ON and OFF. In the following description, the second resonant inductor L5 and the selector switch 18 that form the series circuit connected to the first resonant inductor L11 in parallel will be hereinafter referred to as a "second resonant inductor L12" and a "selector switch 18U," respectively. Also, the second resonant inductor L5 and the selector switch 18 that form the series circuit connected to the first resonant inductor L21 in parallel will be hereinafter referred to as a "second resonant inductor L22" and a "selector switch 18V," respectively. Furthermore, the second resonant inductor L5 and the selector switch 18 that form the series circuit connected to the first resonant inductor L31 in parallel will be hereinafter referred to as a "second resonant inductor L32" and a "selector switch 18W," respectively.

The respective inductances of the second resonant inductors L12, L22, L32 are the same as each other.

Each of the selector switches 18U, 18V, 18W may be, for example, an IGBT. The selector switches 18U, 18V, 18W are respectively controlled in accordance with control signals SU3, SV3, SW3 supplied from the controller 50. Note that each of the selector switches 18U, 18V, 18W does not have to be an IGBT, for example, but may also be, for example, a MOSFET, a GIT, or a bipolar transistor.

The controller 50 sets, with respect to each of the plurality of switching circuits 10, a dead time Td between the high-level period of the PWM signal SU1, SV1, SW1 for the first switching element 1 and the high-level period of the PWM signal SU2, SV2, SW2 for the second switching element 2.

The controller 50 performs a first control operation. The first control operation includes: allowing a high-level period of a control signal for each of the plurality of switches 8, corresponding to one of the plurality of switching circuits 10, to overlap with the dead time Td; and setting the beginning of the high-level period at a point in time earlier by an additional time than the beginning of the dead time Td. The controller 50 changes, according to the potential V15 at the fourth terminal 154 of the regenerative capacitor 15, a resonant frequency of at least one resonant circuit 20 belonging to the plurality of resonant circuits 20.

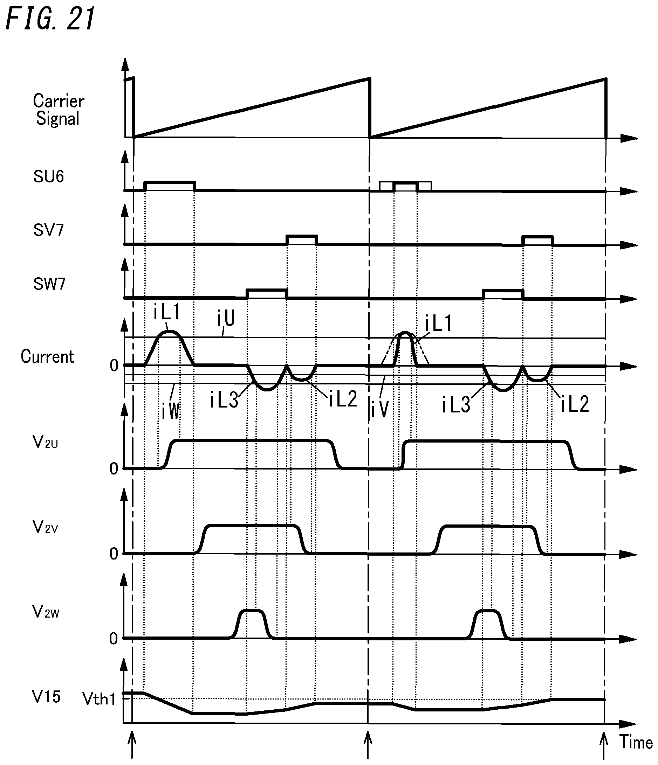

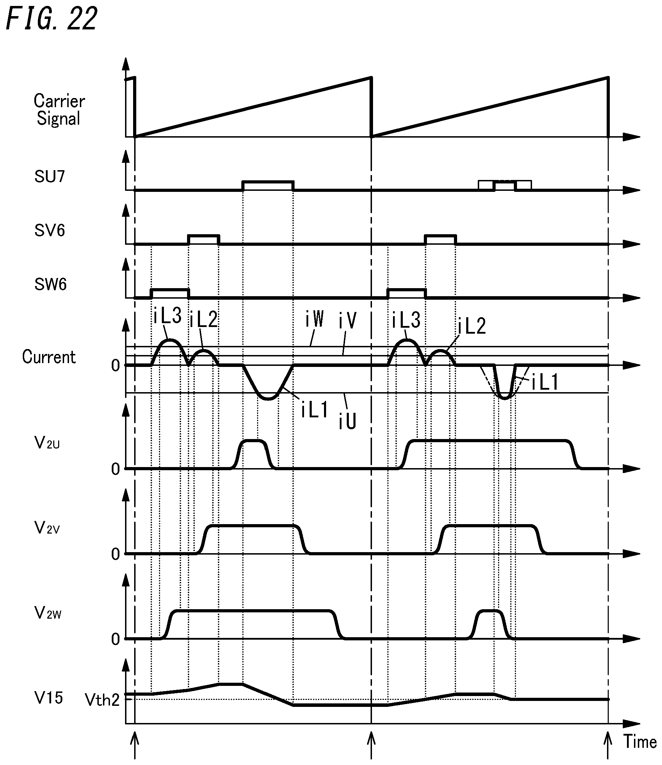

A carrier signal, three control signals out of the three control signals SU6, SU7, SV6, SV7, SW6, SW7, currents iL1, iL2, iL3, the voltages V_{2U}, V_{2V}, V_{2W} across the three second switching elements 2U, 2V, 2W, and the potential V15 at the fourth terminal 154 of the regenerative capacitor 15 are shown in FIGS. 21, 22. In FIGS. 21 and 22, the timing of detecting the potential V15 at the fourth terminal 154 of the regenerative capacitor 15 is indicated by the arrow. The potential V15 at the fourth terminal 154 of the regenerative capacitor 15 is detected every carrier cycle. This allows the controller 50 to acquire the potential detected at the fourth terminal 154 of the regenerative capacitor 15 in every cycle of the carrier cycle. The timing for the controller 50 to acquire the potential detected at the fourth terminal 154 of the regenerative capacitor 15 may be, but does not have to be, simultaneous with the timing of detecting the potential V15 at the fourth terminal 154 of the regenerative capacitor 15., for example.

If the potential detected at the fourth terminal 154 of the regenerative capacitor 15 is less than a first threshold value Vth1, then the controller 50 may turn ON, for example, one selector switch 18U out of the three selector switches 18U, 18V, 18W, thereby shortening the high-level period of the control signal SU6 for the first IGBT 6U of the switch 8U (in FIG. 21, the control signal SU6 that has not been shortened yet is indicated by the two-dot chain). In this manner, the power converter 100D may shorten the resonant period of the resonant circuit 20, including the first resonant inductor L11 and the resonant capacitor 9U, out of the three resonant circuits 20, thus enabling reducing the quantity of electric charges removed from the regenerative capacitor 15 and making the potential V15 at the fourth terminal 154 of the regenerative capacitor 15 greater than the first threshold value Vth1.

On the other hand, if the potential detected at the fourth terminal 154 of the regenerative capacitor 15 is greater than a second threshold value Vth2, then the controller 50 may turn ON, for example, one selector switch 18U out of the three selector switches 18U, 18V, 18W, thereby shortening the high-level period of the control signal SU7 for the second IGBT 7U of the switch 8U (in FIG. 22, the control signal SU7 that has not been shortened yet is indicated by the two-dot chain). In this manner, the power converter 100 may shorten the resonant period of the resonant circuit 20, including the first resonant inductor L11 and the resonant capacitor 9U, out of the three resonant circuits 20, thus enabling reducing the quantity of electric charges stored in the regenerative capacitor 15 and making the potential V15 at the fourth terminal 154 of the regenerative capacitor 15 greater than the first threshold value Vth1.

In the power converter 100D according to the fourth embodiment, the controller 50 changes the resonant period of at least one resonant circuit 20 belonging to the plurality of resonant circuits 20 according to the potential V15 at the fourth terminal 154 of the regenerative capacitor 15. This allows, even if lock of the motor serving as the AC load RA1 causes a change in the state of the load, for example, the power converter 100D according to the fourth embodiment to reduce the variation in the potential V15 at the fourth terminal 154 of the regenerative capacitor 15, thus contributing to improving the power conversion efficiency.

### (Fifth embodiment)

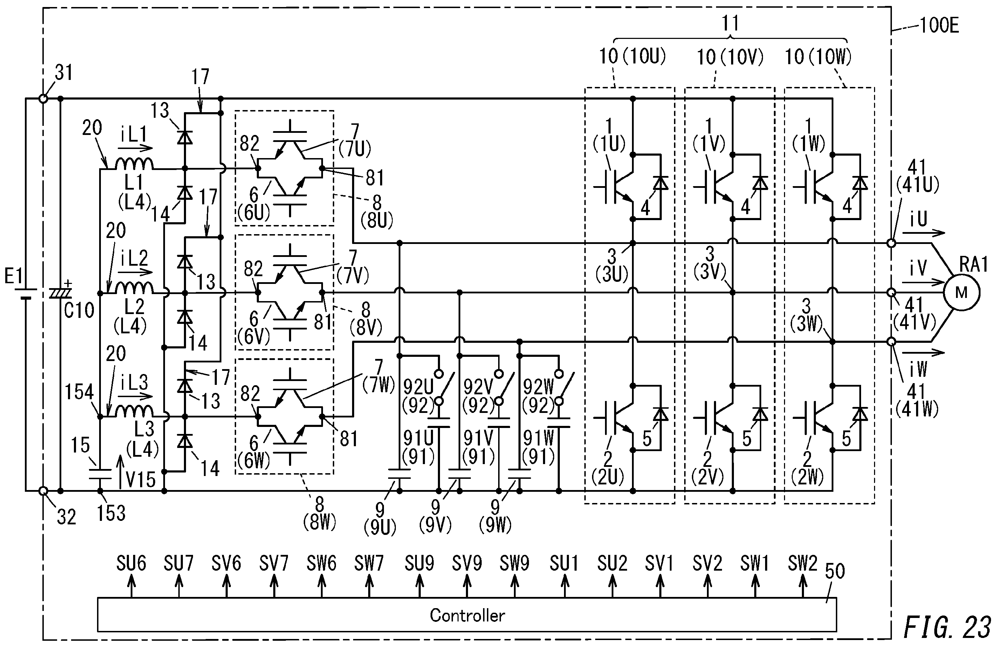

A power converter 100E according to a fifth embodiment will be described with reference to FIG. 23. In the following description, any constituent element of the power converter 100E according to this fifth embodiment, having the same function as a counterpart of the power converter 100D according to the fourth embodiment described above, will be designated by the same reference numeral as that counterpart's, and description thereof will be omitted herein.

In the power converter 100E, each of a plurality of (e.g., three) resonant circuits 20 includes a resonant inductor L4. In the following description, the resonant inductor L4 connected to the switch 8U will be hereinafter referred to as a "resonant inductor L1," the resonant inductor L4 connected to the switch 8V will be hereinafter referred to as a "resonant inductor L2," and the resonant inductor L4 connected to the switch 8W will be hereinafter referred to as a "resonant inductor L3." The respective inductances of the resonant inductors L1, L2, L3 are the same as each other.

In addition, in the power converter 100E, each of the plurality of resonant circuits 20 includes: a second resonant capacitor 91, separately provided from a first resonant capacitor 9 serving as the resonant capacitor 9; and a selector switch 92 connected to the second resonant capacitor 91. In each of the plurality of resonant circuits 20, a series circuit of the second resonant capacitor 91 and the selector switch 92 is connected to the first resonant capacitor 9 in parallel. Each of the plurality of resonant circuits 20 has a resonant frequency that changes as the selector switch 92 turns ON and OFF.

In the following description, the first resonant capacitor 9 connected to the switch 8U will be hereinafter referred to as a "first resonant capacitor 9U," the first resonant capacitor 9 connected to the switch 8V will be hereinafter referred to as a "first resonant capacitor 9V," and the first resonant capacitor 9 connected to the switch 8W will be hereinafter referred to as a "first resonant capacitor 9W." Also, in the following description, the second resonant capacitor 91 connected to the switch 8U will be hereinafter referred to as a "second resonant capacitor 91U," the second resonant capacitor 91 connected to the switch 8V will be hereinafter referred to as a "second resonant capacitor 91V," and the second resonant capacitor 91 connected to the switch 8W will be hereinafter referred to as a "second resonant capacitor 91W." Furthermore, the selector switch 92 connected to the second resonant capacitor 91U in series will be hereinafter referred to as a "selector switch 92U," the selector switch 92 connected to the second resonant capacitor 91V in series will be hereinafter referred to as a "selector switch 92V," and the selector switch 92 connected to the second resonant capacitor 91W in series will be hereinafter referred to as a "selector switch 92W."

The respective capacitances of the second resonant capacitors 91U, 91V, 91W are the same as each other.

Each of the selector switches 92U, 92V, 92W may be an IGBT, for example. The selector switches 92U, 92V, 92W are controlled in accordance with control signals SU9, SV9, SW9 supplied from the controller 50. Note that each of the selector switches 92U, 92V, 92W does not have to be an IGBT, for example, but may also be, for example, a MOSFET, a GIT, or a bipolar transistor.

The controller 50 sets, with respect to each of the plurality of switching circuits 10, a dead time Td between the high-level period of the PWM signal SU1, SV1, SW1 for the first switching element 1 and the high-level period of the PWM signal SU2, SV2, SW2 for the second switching element 2.

The controller 50 performs a first control operation. The first control operation includes: allowing a high-level period of a control signal for each of the plurality of switches 8, corresponding to one of the plurality of switching circuits 10, to overlap with the dead time Td; and setting the beginning of the high-level period at a point in time earlier by an additional time than the beginning of the dead time Td. The controller 50 changes, according to the potential V15 at the fourth terminal 154 of the regenerative capacitor 15, a resonant period by turning ON and OFF the selector switch 92 of at least one resonant circuit 20 belonging to the plurality of resonant circuits 20. This allows, even if lock of the motor serving as the AC load RA1 causes a change in the state of the load, for example, the power converter 100E according to the fifth embodiment to reduce the variation in the potential V15 at the fourth terminal 154 of the regenerative capacitor 15, thus contributing to improving the power conversion efficiency.

### (Other variations)

Note that the first to fifth embodiments and their variations described above are only exemplary ones of various embodiments of the present disclosure and their variations and should not be construed as limiting. Rather, the first to fifth exemplary embodiments and their variations may be readily modified in various manners depending on a design choice or any other factor without departing from the scope of the present disclosure.

For example, each of the plurality of first switching elements 1 and the plurality of second switching elements 2 does not have to be an IGBT but may also be a MOSFET. In that case, each of the plurality of first diodes 4 may also be replaced with, for example, a parasitic diode of a MOSFET serving as its corresponding first switching element 1. In addition, each of the plurality of second diodes 5 may also be replaced with, for example, a parasitic diode of a MOSFET serving as its corresponding second switching element 2. The MOSFET may be, for example, an Si-based MOSFET or an SiC-based MOSFET. Each of the plurality of first switching elements 1 and the plurality of second switching elements 2 may also be, for example, a bipolar transistor or a GaN-based GIT.

Optionally, in the power converters 100, 100A, 100B, 100C, 100D, 100E, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

For example, each of the plurality of switches 8 according to the second to fifth embodiments other than the first embodiment may have any of the exemplary alternative configurations shown in FIGS. 13-17.

Furthermore, the power converter 100, 100A, 100B, 100C, 100D, 100E does not have to be configured to output three-phase AC power but may also be configured to output multi-phase AC power in more than three phases.

### (Aspects)

The foregoing description provides specific implementations of the following aspects of the present disclosure.

A power converter (100; 100A; 100B; 100C) according to a first aspect includes a first DC terminal (31) and a second DC terminal (32), a power converter circuit (11), a plurality of AC terminals (41), a plurality of switches (8), a plurality of resonant capacitors (9), a resonant inductor (L0), a regenerative capacitor (15), and a controller (50). The power converter circuit (11) includes a plurality of first switching elements (1) and a plurality of second switching elements (2). In the power converter circuit (11), a plurality of switching circuits (10) in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first terminal (81) thereof connected to the connection node (3) between the first switching element (1) and the second switching element (2) of a corresponding one of the plurality of switching circuits (10). The plurality of switches (8) have their respective second terminals (82) connected in common to a common connection node (25). The plurality of resonant capacitors (9) are provided one to one for the plurality of switches (8). Each of the plurality of resonant capacitors (9) is connected between the first terminal (81) of a corresponding one of the plurality of switches (8) and the second DC terminal (32). The resonant inductor (L0) has a first terminal and a second terminal. In the resonant inductor (L0), the first terminal of the resonant inductor (L0) is connected to the common connection node (25). The regenerative capacitor (15) has a third terminal (153) and a fourth terminal (154). In the regenerative capacitor (15), the third terminal (153) of the regenerative capacitor (15) is connected to either the first DC terminal (31) or the second DC terminal (32). The controller (50) applies a PWM signal (SU1, SV1, SW1, SU2, SV2, SW2), having a potential alternating between a high level and a low level, to each of the plurality of first switching elements (1) and each of the plurality of second switching elements (2). The controller (50) performs a first control operation. The first control operation includes: setting, with respect to each of the plurality of switching circuits (10), a dead time (Td) between a high-level period of the PWM signal (SU1, SV1, SW1) for the first switching element (1) and a high-level period of the PWM signal (SU2, SV2, SW2) for the second switching element (2). The controller (50) performs the first control operation including allowing a high-level period of a control signal for each of the plurality of switches (8), corresponding to one of the plurality of switching circuits (10), to overlap with the dead time (Td) and setting a beginning of the high-level period at a point in time earlier by an additional time than a beginning of the dead time (Td). The controller (50) selectively performs, according to a potential detected at the fourth terminal (154) of the regenerative capacitor (15) and polarities of a plurality of output currents (iU, iV, iW) supplied from the plurality of AC terminals (41), either a second control operation or a third control operation. The second control operation includes allowing respective high-level periods of control signals for two switches (8) belonging to the plurality of switches (8) to overlap with each other. The third control operation includes prohibiting the high-level periods of the control signals for the plurality of switches (8) from overlapping with each other.

This aspect contributes to improving the power conversion efficiency.

In a power converter (100; 100A; 100B; 100C) according to a second aspect, which may be implemented in conjunction with the first aspect, the controller (50) performs the second control operation when either a first condition or a second condition is satisfied and performs the third control operation when either a third condition or a fourth condition is satisfied. The first condition is that the potential detected at the fourth terminal (154) of the regenerative capacitor (15) be less than a first threshold value (Vth1) which is less than one half of a value (Vd) of voltage applied between the first DC terminal (31) and the second DC terminal (32) and that a product of the plurality of output currents (iU, iV, iW) be positive. The second condition is that the potential detected at the fourth terminal (154) of the regenerative capacitor (15) be greater than a second threshold value (Vth2) which is greater than one half of the value (Vd) of the voltage applied between the first DC terminal (31) and the second DC terminal (32) and that the product of the plurality of output currents (iU, iV, iW) be negative. The third condition is that the potential detected at the fourth terminal (154) of the regenerative capacitor (15) be less than the first threshold value (Vth1) which is less than one half of the value (Vd) of the voltage applied between the first DC terminal (31) and the second DC terminal (32) and that the product of the plurality of output currents (iU, iV, iW) be negative. The fourth condition is that the potential detected at the fourth terminal (154) of the regenerative capacitor (15) be greater than the second threshold value (Vth2) which is greater than one half of the value (Vd) of the voltage applied between the first DC terminal (31) and the second DC terminal (32) and that the product of the plurality of output currents (iU, iV, iW) be positive.

This aspect may reduce a variation in the potential (V15) at the regenerative capacitor (15) irrespective of the polarities of the plurality of output currents (iU, iV, iW) supplied from the plurality of AC terminals (41).

In a power converter (100; 100A; 100B; 100C) according to a third aspect, which may be implemented in conjunction with the first or second aspect, the controller (50) performs the second control operation by shifting the respective high-level periods of the two control signals for the two switches (8) belonging to the plurality of switches (8) to allow the high-level periods to overlap with each other.

This aspect allows the absolute value of a current (iL0) flowing through the resonant inductor (L0) to be increased, thus enabling increasing the magnitude of regulation (i.e., the magnitude of variation) of the potential (V15) at the regenerative capacitor (15).

In a power converter (100; 100A; 100B; 100C) according to a fourth aspect, which may be implemented in conjunction with the first or second aspect, the controller (50) performs the second control operation by shifting the respective high-level periods of the two control signals for the two switches (8) belonging to the plurality of switches (8) to allow the high-level periods to partially overlap with each other.

This aspect allows the absolute value of the current (iL0) flowing through the resonant inductor (L0) to be increased, thus enabling increasing the magnitude of regulation (i.e., the magnitude of variation) of the potential (V15) at the regenerative capacitor (15).

In a power converter (100; 100A; 100B; 100C) according to a fifth aspect, which may be implemented in conjunction with any one of the first to fourth aspects, the controller (50) performs the third control operation by shifting the respective high-level periods of the two control signals for the two switches (8) belonging to the plurality of switches (8) to prohibit the high-level periods from overlapping with each other.

This aspect allows the absolute value of the current (iL0) flowing through the resonant inductor (L0) to be decreased.

In a power converter (100; 100A; 100B; 100C) according to a sixth aspect, which may be implemented in conjunction with any one of the first to fifth aspects, the controller (50) performs the second control operation and the third control operation without shifting the high-level periods of the two control signals for the two switches (8) belonging to the plurality of switches (8).

A power converter (100D; 100E) according to a seventh aspect includes a first DC terminal (31) and a second DC terminal (32), a power converter circuit (11), a plurality of AC terminals (41), a plurality of switches (8), a plurality of resonant circuits (20), a regenerative capacitor (15), and a controller (50). The power converter circuit (11) includes a plurality of first switching elements (1) and a plurality of second switching elements (2). In the power converter circuit (11), a plurality of switching circuits (10) in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first terminal (81) thereof connected to the connection node (3) between the first switching element (1) and the second switching element (2) of a corresponding one of the plurality of switching circuits (10). The plurality of resonant circuits (20) are provided one to one for the plurality of switches (8). Each of the plurality of resonant circuits (20) has a variable resonant frequency. The regenerative capacitor (15) has a third terminal (153) and a fourth terminal (154). In the regenerative capacitor (15), the third terminal (153) is connected to either the first DC terminal (31) or the second DC terminal (32), and the fourth terminal (154) is connected to the plurality of resonant circuits (20). The controller (50) applies a PWM signal, having a potential alternating between a high level and a low level, to each of the plurality of first switching elements (1) and each of the plurality of second switching elements (2). Each of the plurality of resonant circuits (20) includes: a resonant capacitor (9) connected between the first terminal (81) of a corresponding one of the plurality of switches (8) and the second DC terminal (32); and a resonant inductor (L4) connected between a second terminal (82) of a corresponding one of the plurality of switches (8) and the fourth terminal (154) of the regenerative capacitor (15). The controller (50) sets, with respect to each of the plurality of switching circuits (10), a dead time (Td) between a high-level period of the PWM signal for the first switching element (1) and a high-level period of the PWM signal for the second switching element (2). The controller (50) performs a first control operation. The controller (50) performs the first control operation including allowing a high-level period of a control signal for each of the plurality of switches (8), corresponding to one of the plurality of switching circuits (10), to overlap with the dead time (Td) and setting a beginning of the high-level period at a point in time earlier by an additional time than a beginning of the dead time (Td). The controller (50) changes, according to a potential (V15) at the fourth terminal (154) of the regenerative capacitor (15), a resonant period of at least one resonant circuit (20) belonging to the plurality of resonant circuits (20).

This aspect contributes to improving the power conversion efficiency.

In a power converter (100D) according to an eighth aspect, which may be implemented in conjunction with the seventh aspect, each of the plurality of resonant circuits (20) includes: a second resonant inductor (L5) provided separately from a first resonant inductor (L4) serving as the resonant inductor (L4); and a selector switch (18) connected to the second resonant inductor (L5). In each of the plurality of resonant circuits (20), a series circuit of the second resonant inductor (L5) and the selector switch (18) is connected to the first resonant inductor (L4) in parallel. Each of the plurality of resonant circuits (20) has a resonant frequency which changes as the selector switch (18) turns ON and OFF.

In a power converter (100E) according to a ninth aspect, which may be implemented in conjunction with the seventh aspect, each of the plurality of resonant circuits (20) includes: a second resonant capacitor (91) provided separately from a first resonant capacitor (9) serving as the resonant capacitor (9); and a selector switch (92) connected to the second resonant capacitor (91). In each of the plurality of resonant circuits (20), a series circuit of the second resonant capacitor (91) and the selector switch (92) is connected to the first resonant capacitor (9) in parallel. Each of the plurality of resonant circuits (20) has a resonant frequency which changes as the selector switch (92) turns ON and OFF.

### Reference Signs List

- 1: First Switching Element
- 2: Second Switching Element
- 3: Connection Node
- 8: Switch
- 81: First Terminal
- 82: Second Terminal
- 9: Resonant Capacitor (First Resonant Capacitor)
- 10: Switching Circuit
- 11: Power Converter Circuit
- 15: Regenerative Capacitor
- 153: Third Terminal
- 154: Fourth Terminal
- 18: Selector Switch
- 20: Resonant Circuit
- 31: First DC Terminal
- 32: Second DC Terminal
- 41: AC Terminal
- 50: Controller
- 91: Second Resonant Capacitor
- 92: Selector Switch
- 100, 100A, 100B, 100C, 100D, 100E: Power Converter
- iU, iV, iW: Output Current
- L0: Resonant Inductor
- L1: First Resonant Inductor
- L2: Second Resonant Inductor
- L3: Third Resonant Inductor
- L4: First Resonant Inductor
- L5: Second Resonant Inductor
- Td: Dead Time
- Vd: Voltage Value
- Vth1: First Threshold Value
- Vth2: Second Threshold Value

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first terminal thereof connected to the connection node between the first switching element and the second switching element of a corresponding one of the plurality of switching circuits, the plurality of switches having their respective second terminals connected in common to a common connection node;
a plurality of resonant capacitors provided one to one for the plurality of switches, each of the plurality of resonant capacitors being connected between the first terminal of a corresponding one of the plurality of switches and the second DC terminal;
a resonant inductor having a first terminal and a second terminal, the first terminal of the resonant inductor being connected to the common connection node;
a regenerative capacitor having a third terminal and a fourth terminal, the third terminal of the regenerative capacitor being connected to either the first DC terminal or the second DC terminal; and
a controller configured to apply a PWM signal, having a potential alternating between a high level and a low level, to each of the plurality of first switching elements and the plurality of second switching elements,
the controller being configured to perform a first control operation, the first control operation including: setting, with respect to each of the plurality of switching circuits, a dead time between a high-level period of the PWM signal for the first switching element and a high-level period of the PWM signal for the second switching element; allowing a high-level period of a control signal for each of the plurality of switches, corresponding to one of the plurality of switching circuits, to overlap with the dead time; and setting a beginning of the high-level period at a point in time earlier by an additional time than a beginning of the dead time, and
the controller being configured to selectively perform, according to a potential detected at the fourth terminal of the regenerative capacitor and polarities of a plurality of output currents supplied from the plurality of AC terminals, either a second control operation or a third control operation, the second control operation including allowing respective high-level periods of control signals for two switches belonging to the plurality of switches to overlap with each other, the third control operation including prohibiting the high-level periods of the control signals for the plurality of switches from overlapping with each other.

2. The power converter of claim 1, wherein
the controller is configured to:
perform the second control operation when either a first condition or a second condition is satisfied; and
perform the third control operation when either a third condition or a fourth condition is satisfied,
the first condition is that the potential detected at the fourth terminal of the regenerative capacitor be less than a first threshold value which is less than one half of a value of voltage applied between the first DC terminal and the second DC terminal and that a product of the plurality of output currents be positive,
the second condition is that the potential detected at the fourth terminal of the regenerative capacitor be greater than a second threshold value which is greater than one half of the value of the voltage applied between the first DC terminal and the second DC terminal and that the product of the plurality of output currents be negative,
the third condition is that the potential detected at the fourth terminal of the regenerative capacitor be less than the first threshold value which is less than one half of the value of the voltage applied between the first DC terminal and the second DC terminal and that the product of the plurality of output currents be negative, and
the fourth condition is that the potential detected at the fourth terminal of the regenerative capacitor be greater than the second threshold value which is greater than one half of the value of the voltage applied between the first DC terminal and the second DC terminal and that the product of the plurality of output currents be positive.

3. The power converter of claim 1 or 2, wherein
the controller is configured to perform the second control operation by shifting the respective high-level periods of the two control signals for the two switches belonging to the plurality of switches to allow the high-level periods to overlap with each other.

4. The power converter of claim 1 or 2, wherein
the controller is configured to perform the second control operation by shifting the respective high-level periods of the two control signals for the two switches belonging to the plurality of switches to allow the high-level periods to partially overlap with each other.

5. The power converter of any one of claims 1 to 4, wherein
the controller is configured to perform the third control operation by shifting the respective high-level periods of the two control signals for the two switches belonging to the plurality of switches to prohibit the high-level periods from overlapping with each other.

6. The power converter of any one of claims 1 to 5, wherein
the controller is configured to perform the second control operation and the third control operation without shifting the high-level periods of the two control signals for the two switches belonging to the plurality of switches.

7. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first terminal thereof connected to the connection node between the first switching element and the second switching element of a corresponding one of the plurality of switching circuits;
a plurality of resonant circuits provided one to one for the plurality of switches, each of the plurality of resonant circuits having a variable resonant frequency;
a regenerative capacitor having a third terminal and a fourth terminal, the third terminal of the regenerative capacitor being connected to either the first DC terminal or the second DC terminal, the fourth terminal of the regenerative capacitor being connected to the plurality of resonant circuits; and
a controller configured to apply a PWM signal, having a potential alternating between a high level and a low level, to each of the plurality of first switching elements and the plurality of second switching elements,
each of the plurality of resonant circuits including:
a resonant capacitor connected between the first terminal of a corresponding one of the plurality of switches and the second DC terminal; and
a resonant inductor connected between a second terminal of a corresponding one of the plurality of switches and the fourth terminal of the regenerative capacitor,
the controller being configured to perform a first control operation, the first control operation including: setting, with respect to each of the plurality of switching circuits, a dead time between a high-level period of the PWM signal for the first switching element and a high-level period of the PWM signal for the second switching element; allowing a high-level period of a control signal for each of the plurality of switches, corresponding to one of the plurality of switching circuits, to overlap with the dead time; and setting a beginning of the high-level period at a point in time earlier by an additional time than a beginning of the dead time, and
the controller being configured to change, according to a potential at the fourth terminal of the regenerative capacitor, a resonant period of at least one resonant circuit belonging to the plurality of resonant circuits.

8. The power converter of claim 7, wherein
each of the plurality of resonant circuits includes: a second resonant inductor provided separately from a first resonant inductor serving as the resonant inductor; and a selector switch connected to the second resonant inductor,
in each of the plurality of resonant circuits, a series circuit of the second resonant inductor and the selector switch is connected to the first resonant inductor in parallel, and
each of the plurality of resonant circuits has a resonant frequency which changes as the selector switch turns ON and OFF.

9. The power converter of claim 7, wherein
each of the plurality of resonant circuits includes: a second resonant capacitor provided separately from a first resonant capacitor serving as the resonant capacitor; and a selector switch connected to the second resonant capacitor,
in each of the plurality of resonant circuits, a series circuit of the second resonant capacitor and the selector switch is connected to the first resonant capacitor in parallel, and
each of the plurality of resonant circuits has a resonant frequency which changes as the selector switch turns ON and OFF.
